# EUROPÄISCHE PATENTSCHRIFT

(11) **EP 3 011 752 B1**
(45) Veröffentlichungstag und Bekanntmachung des Hinweises auf die Patenterteilung: **15.11.2017**
(21) Anmeldenummer: 14733585.5
(22) Anmeldetag: 18.06.2014
(51) Int. Cl.: H04N 21/2187, H04N 21/234, H04N 21/2662, H04N 21/414, H04N 21/4143, H04N 21/44, H04N 21/442, H04N 21/4425, H04N 21/61, H04N 21/643, H04N 21/647, H04N 21/845, H04N 21/854

(54) **KONZEPT ZUR BESTIMMUNG DER QUALITÄT EINES MEDIADATENSTROMS MIT VARIIERENDER QUALITÄT-ZU-BITRATE**
CONCEPT FOR DETERMINING THE QUALITY OF A MEDIA DATA STREAM WITH VARYING QUALITY-TO-BIT RATE
CONCEPT DE DÉTERMINATION DE LA QUALITÉ D'UN FLUX DE DONNÉES MÉDIA À RAPPORT QUALITÉ/DÉBIT BINAIRE VARIABLE

(30) Priorität: 19.06.2013 DE 102013211571
(43) Veröffentlichungstag der Anmeldung: 27.04.2016
(73) Patentinhaber: Opticom, Dipl.-Ing. Michael Keyhl GmbH, 91052 Erlangen (DE)
(72) Erfinder: SCHMIDMER, Christian, 90491 Nürnberg (DE); KEYHL, Michael, 90562 Heroldsberg (DE); OBERMANN, Matthias, 91058 Erlangen (DE); BITTO, Roland, 90453 Nürnberg (DE)
(74) Vertreter: Schenk, Markus
(86) Internationale Anmeldenummer: PCT/EP2014/062853
(87) Internationale Veröffentlichungsnummer: WO 2014/202682

(56) Entgegenhaltungen:
- EP-A1- 1 622 395
- WO-A1-2009/055899
- WO-A1-2012/143764
- US-A1- 2002 181 408
- US-A1- 2007 271 590
- US-A1- 2012 278 441
- WEBSTER A A ET AL: "An objective video quality assessment system based on human perception", PROCEEDINGS OF SPIE, S P I E - INTERNATIONAL SOCIETY FOR OPTICAL ENGINEERING, US, Bd. 1913, 1. Januar 1993 (1993-01-01), Seiten 15-26, XP002077307, ISSN: 0277-786X, DOI: 10.1117/12.152700

## Beschreibung

Die vorliegende Erfindung bezieht sich auf die Bestimmung einer Qualität eines Mediadatenstroms mit variierender Qualität-zu-Bitrate.

Für die Übertragung von Audio- und Videosignalen stehen in der modernen Übertragungstechnik spezielle Kodierverfahren zur Datenreduzierung zur Verfügung. Diese werden eingesetzt, um abhängig von der aktuellen Kapazität des Übertragungskanals dem Endbenutzer die bestmögliche Qualität zur Verfügung zu stellen.

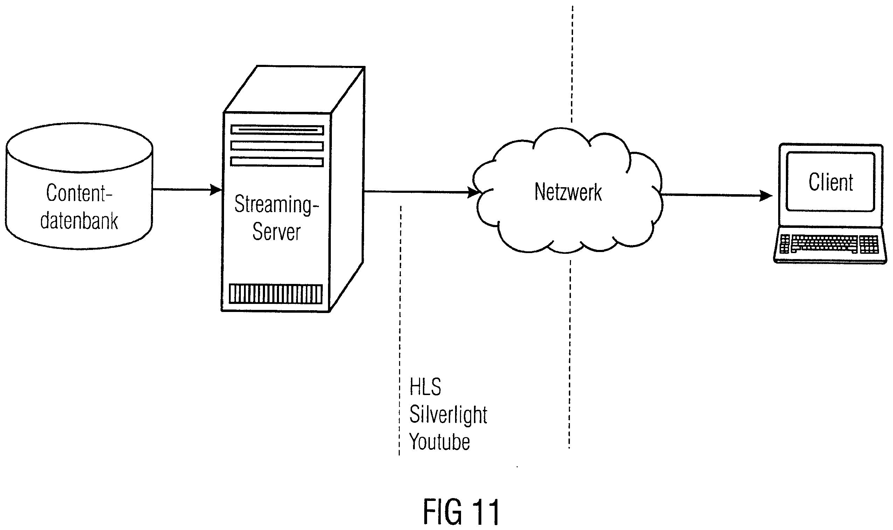

Fig. 11 zeigt eine typische Übertragungsstrecke zu einem Endbenutzer, wie sie zur Zeit verwendet wird. Sie umfasst eine Datenbank, die alle möglichen zu übertragenden Mediadaten speichert, einen Streaming-Server, der die Auslieferung der Daten über ein Netzwerk übernimmt, das Netzwerk selbst sowie den Endbenutzer-Client, der die gewünschten Daten in Empfang nimmt. Bei den Mediadaten kann es sich beispielsweise um ein Video handeln. Eine häufig gestellte Frage ist diejenige, wie eigentlich die Qualität des vom Endbenutzer wahrgenommenen Videos ist. Es hat sich herausgestellt, dass der zunehmende Anteil an adaptiven Videostreaming-Techniken, wie z.B. DASH (Dynamic Adaptive Streaming over http) oder HLS (HTTP Live Streaming), bei denen die Mediadaten serverseitig in unterschiedlichen Qualitätsstufen bereitgestellt werden, ein stabiles Qualitätsmaß bzw. ein uniformes Qualitätsmaß, das unterschiedliche Bildgrößen und/oder Qualitätsstufen möglichst standardkonform bewerten kann, zur Beurteilung der empfangsseitig wahrgenommenen Qualität der Mediainhalte notwendig macht

Im Allgemeinen können Qualitätskonzepte in drei Klassen eingeteilt werden:

Sogenannte Full-Reference(FR-)Qualitätsmessverfahren vergleichen den ursprünglichen, nicht durch Kompression verschlechterten Mediainhalt mit dem Mediainhalt, dessen Qualität zu bestimmen ist. Nachteilhaft ist hier die Notwendigkeit des Zugriffs auf die Ursprungsfassung des Mediainhalts. Sogenannte No-Reference(NR)-Qualitätsmessverfahren bestimmen die Qualität ausschließlich auf Basis des empfangenen Mediainhalts bzw. des diesen Mediainhalt darstellenden empfangenen Datenstroms. Gegebenenfalls werden hier nur Übertragungsstörungen detektiert und zur Bestimmung des Qualitätsmaßes quantifiziert. Sogenannte Reduced-Reference(RR-)Qualitätsverfahren stellen eine Art Zwischenlösung zwischen FR- und NR-Verfahren dar, indem bei ihnen zur Bestimmung der empfangsseitigen Qualität nicht ausschließlich der empfangene Datenstrom bzw. der empfangene Mediainhalt verwendet wird, sondern auf der Senderseite in Echtzeit ermittelte Zwischenergebnisse dabei helfen, die empfangsseitige Qualität zu bestimmen. Diese Parameter oder Zwischenergebnisse werden üblicherweise im übertragenen Mediadatenstrom mitübertragen (mitkodiert).

Insbesondere bei mobilen Anwendungen sind FR-Qualitätsmessverfahren kaum zu realisieren. Eine Lösung für dieses Problem wird in der US 2009/0153668 A1 beschrieben. Sendeseitig werden dort in den übertragenen Datenstrom sendeseitig erhaltene Qualitätsanalyseergebnisse eingefügt, wie z.B. im RTP-Erweiterungsheader, welche Qualitätsanalyseergebnisse beispielsweise das Ergebnis einer FR-Analyse des übertragenen Mediainhaltes sind. Empfangsseitig wird geprüft, ob der übertragene Mediadatenstrom fehlerfrei übertragen wurde. In Phasen, bei denen dies der Fall ist, werden die innerhalb des Datenstroms selbst übertragenen Qualitätsinformationen verwendet, um die empfangene Qualität zu bestimmen. In Phasen, bei denen eine fehlerhafte Übertragung vorliegt, d.h. Übertragungsstörungen auftraten, wird empfangsseitig eine Qualitätsschätzung durchgeführt. Aus einer Kombination beider Qualitätsmessungen, d.h. derjenigen, die auf Basis der übertragenen Qualitätsinformationen in störungsfreien Phasen erhalten worden ist, und derjenigen, die in störungsbehafteten Phasen empfangsseitig geschätzt worden ist, wird dann schließlich die empfangsseitige Qualität abgeleitet. Obwohl diese Vorgehensweise dazu führt, dass der Referenz-Mediainhalt zur Anwendung eines FR-Verfahrens empfangsseitig nicht vorhanden sein muss, ist das in der Druckschrift vorgestellte Verfahren in vielerlei Hinsicht nachteilhaft und für eine zufriedenstellende Lösung bei adaptiven Streaming-Verfahren nicht geeignet. Adaptive Streaming-Verfahren stellen den einzelnen Clients den Mediainhalt in einer variierenden Qualität zur Verfügung. Naturgemäß variiert die Qualität für jeden Client unterschiedlich, je nachdem, welche Bandbreite ihm gerade zur Verfügung steht. Um dennoch eine variierende Qualität für eine Vielzahl von Clienten gleichzeitig zur Verfügung zu stellen, greifen adaptive Streaming-Verfahren üblicherweise auf vorkodierte Daten zurück. Ein Video wird beispielsweise in Zeitabschnitte unterteilt und für jeden Zeitabschnitt werden vorab kodierte Versionen mit unterschiedlichsten Qualitätsstufen erstellt. Ein vorbestimmtes Protokoll ermöglicht den Clients, das Video in variierenden Qualitätsstufen zu laden, indem an Zeitabschnittsgrenzen zwischen den einzelnen Qualitätsstufen gewechselt wird. Diese Zeitabschnitte können beispielsweise zwei bis vier Sekunden lang sein und werden auch manchmal als "Chunks" bezeichnet. Mit subjektiven Tests abgeglichene FR-Qualitätsmessverfahren, wie z.B. ITU-T J.247, erfordern zur Ermittlung der Qualität aber einen Zeitraum, der länger als die Chunk-Zeitdauer ist, d.h. sich über mehrere Chunks hinweg erstreckt. Zur Realisierung des in der US-Druckschrift beschriebenen Verfahrens müsste also sendeseitig für jeden Client eigens eine sendeseitige Qualitätsmessung durchgeführt und der Empfangsseite per Erweiterungsheadern zur Verfügung gestellt werden, und zwar online bzw. in Echtzeit für alle Clienten. Ein solches Vorgehen ist aber für viele Anwendungen mit vielen gleichzeitig vorhandenen Clienten wegen des hohen Aufwands undenkbar.

Die US 2012/0 278 441 A1 beschreibt ein Verfahren zur Schätzung der Qualität auf Empfangsseite, d.h. der Qualität, die der Endbenutzer tatsächlich wahrnimmt. Als Vorteil des Verfahrens wird angegeben, dass es auf Empfangsseite nur wenige Rechenleistung benötige, und dass es zu beliebigen Zeitpunkten durchführbar sei. Auf diese Weise ist es nämlich auch möglich, die empfangsseitigen Messungen dazu zu verwenden, die Mediadatenübermittlung zu beeinflussen. Das in der US-Schrift vorgeschlagene Verfahren beginnt damit, dass sendeseitig der Medieninhalt in unterschiedlicher Qualität bereitgestellt wird. Bei Bedarf wird sendeseitig eine den Medieninhalt repräsentierende Signatur erstellt, die mehr oder weniger vom gesamten Bildinhalt abhängt und für den Bildinhalt mehr oder weniger repräsentativ ist. Diese Signatur wird zusammen mit dem Bildinhalt an die Empfangsseite so übertragen, dass zumindest die Signatur fehlerfrei erhalten wird. Empfangsseitig wird nun auf gleiche Art und Weise eine Signatur aus dem erhaltenen Medieninhalt erzeugt und dann mit der von der Sendeseite aus mitgesendeten Signatur verglichen, um aus dem Vergleich einen Qualitätswert QoE zu erhalten. Für die Abbildung des Vergleichs auf den QoE-Wert wird eine Klassifizierungsfunktion verwendet, die entweder ständig trainiert und/oder a priori vorbekannt ist. Der QoE-Wert gibt nun die Qualität auf Empfangsseite an, wie z.B. in den Kategorien "exzellent", "gut", "angemessen" und "schlecht". Der QoE-Wert könne von Empfangsseite wieder zurück zur Sendeseite gesendet werden, um dort von dem Mediasurferserver verwendet zu werden, um durch Maßnahmen, wie z.B. Übertragungswegumverlegung, Änderung der Abspielqualität oder dergleichen, die empfangsseitig tatsächlich erhaltene Qualität an diejenige anzupassen, die tatsächlich erwartet wird.

Die EP 1622395 A1 beschreibt ein Konzept zur Videoqualitätsauswertung, bei dem ein ungestörtes Referenzvideosignal und ein gestörtes Videosignal, das aus ersterem erzeugt worden ist, verglichen werden. Insbesondere werden Videosignalmerkmalswerte für beide Signale berechnet und aus der Differenz derselben wird dann eine subjektive Qualität des gestörten Videosignals geschätzt. Korrekturinformationen in einer Datenbank, die den Videosignalmerkmalswerten entsprechen, werden verwendet, um dies subjektive Qualität zu korrigieren.

Die WO 2009/055899 A1 bezieht sich auf die Transcodierung von digitalen Bildern mit einer Qualität-beachtenden Auswahl von Parametern. Dazu wird eine Qualitätsprädiktionstabelle erzeugt. Diese Tabelle wird durch Transcodieren von Bildern eines Trainingssatzes erzeugt, die einen bestimmten Bereich von Betrachterbedingungen und Qualitätsfaktoren abdecken. Die Tabelle ordnet eingehendem Bildmaterial zu verwendende Qualitätsfaktoren bei der Kompression in der Transcodierung zu.

Die Aufgabe der vorliegenden Erfindung besteht deshalb darin, ein Konzept zur Bestimmung der Qualität eines Mediadatenstroms zu schaffen, das effektiver ist und/oder ermöglicht, im Sinne einer Ende-zu-Ende Messung alle für die Qualitätswahrnehmung entscheidenden Charakteristika realistisch zu erfassen und zu bewerten.

Diese Aufgabe wird durch den Gegenstand der neu überreichten unabhängigen Patentansprüche gelöst.

Der Kerngedanke der vorliegenden Erfindung besteht darin, erkannt zu haben, dass die Bestimmung einer Qualität eines Mediadatenstroms, der eine Sequenz von Datenstromabschnitten aufweist, die unterschiedliche Mediaabschnitte eines Mediainhalts in über den Mediainhalt hinweg variierenden Qualität-zu-Bitrate-Stufen übertragen, wie z.B. im Rahmen eines adaptiven Streamings, effektiver gestaltet werden kann, wenn aus jedem Datenstromabschnitt eine Kennung für den jeweiligen Abschnitt abgeleitet wird und für jeden Datenstromabschnitt ein Parametersatz aus einer Nachschlagtabelle anhand der für den jeweiligen Datenstromabschnitt abgeleiteten Kennung nachgeschlagen wird, so dass es möglich ist, die Parametersätze zu sammeln und auf Basis derselben die Qualität zu bestimmen. Diese Vorgehensweise ermöglicht es, dass die Datenstromabschnitte, aus denen sich der Mediadatenstrom eines jeden Clienten je nach seiner individuellen, zeitlich sich möglicherweise ändernden Bandbreitensituation zusammensetzt, unverändert bleiben - dem Datenstrom muss nichts hinzugefügt werden. Anders ausgedrückt, ist es nicht notwendig, zusammen mit dem Mediadatenstrom Qualitätsinformationen an die Empfangsseite zu übertragen. Vielmehr reichen die in der Nachschlagtabelle für die Datenstromabschnitte zur Verfügung gestellten Parameter aus, um die Qualität empfangsseitig an jedem Clienten zu bestimmen, und zwar unabhängig der für den jeweilige Clienten gewählten Variation der Qualität-zu-Bitrate und auch trotz eines Test- oder Analyseabschnitts, in dem die Qualität bestimmt wird, in dem mehrere Mediaabschnitte liegen. Auf diese Weise ist es möglich, auf standardisierte, mit subjektiven Tests abgeglichene Messverfahren, wie z.B. ITU-T J.247, als eine Basis für die Qualitätsbestimmung zurückzugreifen.

Gemäß einem Ausführungsbeispiel wird die Ableitung der Kennung durch Anwendung von beispielsweise einer Hash-Funktion auf eine nicht-dekodierte Version des jeweiligen Datenstromabschnitts durchgeführt. Dies ermöglicht eine effektive Unterscheidbarkeit zwischen den Datenstromabschnitten unterschiedlicher Qualität, unterschiedlicher Mediaabschnitte eines Mediainhalts sowie unterschiedlicher Mediainhalte selbst. Insbesondere ist diese Art der Kennungsableitung inhärent abgesichert gegen Übertragungsveränderungen: Übertragungsfehler sowie Transkodierungen entlang der Übertragungsstrecke zum Clienten führen mit ausreichend hoher Wahrscheinlichkeit dazu, dass das Nachschlagen fehlschlägt, so dass nicht irrtümlich vorab bestimmte Parametersätze, die folglich im wesentlich mit der Kodierqualität, nicht aber mit anschließenden Veränderungen des Mediadatenstroms korrelieren können, zur Qualitätsbestimmung verwendet werden. Das Nachschlagen ermöglicht also implizit auch das Detektieren von Übertragungsfehlern bzw. Umkodierungen, wenn die Kennung mittels der nicht-dekodierten Version, z.B. auf Elementary Stream (ES) Ebene durchgeführt wird.

Vorteilhafte Ausgestaltungen der vorliegenden Anmeldung sind Gegenstand der abhängigen Patentansprüche. Bevorzugte Ausführungsbeispiele der vorliegenden Anmeldung werden nachfolgend Bezug nehmend auf die beiliegenden Zeichnungen näher erläutert, unter welchen
- Fig. 1: ein schematisches Blockschaltbild einer Netzwerkumgebung mit einem Server und einem Client zeigt, zwischen welchen eine Mediadatenstromübertragung mit variierender Qualität-zu-Bitrate stattfindet, in welcher Umgebung gemäß einem Ausführungsbeispiel ein Qualitätsbestimmungskonzept angewendet wird;
- Fig. 2: eine schematische Zeichnung eines Mediadatenstroms und des in demselben kodierten Mediainhalts zeigt sowie das Vorhandensein verschiedener Qualität-zu-Bitrate-Stufen auf Serverseite veranschaulicht;
- Fig. 3: ein Blockschaltbild der Vorrichtung zur Qualitätsbestimmung gemäß einem Ausführungsbeispiel zeigt, wobei die Vorrichtung auf eine offline vorbereitete Nachschlagtabelle zugreift;
- Fig. 4: ein schematisches Blockschaltbild eines Servers mit einer Nachschlagtabelle gemäß einem Ausführungsbeispiel zeigt, wobei der Server mit der Vorrichtung von Fig. 3 interagieren kann;
- Fig. 5: ein Flussdiagramm für eine Tabellenerzeugung gemäß einem Ausführungsbeispiel zeigt;
- Fig. 6: ein Blockschaltbild für eine mögliche Implementierung einer Vorrichtung zur Erzeugung einer Nachschlagtabelle gemäß einem Ausführungsbeispiel zeigt;
- Fig. 7: ein Flussdiagramm für eine mögliche Funktionsweise der Vorrichtung zur Qualitätsbestimmung auf Empfangsseite gemäß einem Ausführungsbeispiel zeigt;
- Fig. 8: ein Flussdiagramm für eine Parametersatzbestimmung gemäß einem Ausführungsbeispiel zeigt;
- Fig. 9: schematisch einen Ausschnitt aus einem serverseitig zur Verfügung stehenden Mediensignal mit einer bestimmten konstanten Qualität-zu-Bitrate-Stufe mit einem zeitlich korrespondierenden Abschnitt eines Referenzsignals zeigt, um hieran die Parametersatzbestimmung zu veranschaulichen;
- Fig. 10: ein Flussdiagramm für eine mögliche Implementierung einer Gesamtqualitätsbestimmung unter Berücksichtigung von Übertragungsfehlern gemäß einem Ausführungsbeispiel zeigt; und
- Fig. 11: eine übliche Server-Client-Netzwerkumgebung mit Bitraten-adaptiver Mediadatenstromübertragung zeigt; und
- Fig. 12: eine schematische Darstellung eines vierschichtigen OTT- (Over-The-Top-) Qualitätsmodells, das die Gesamt-QoE eines OTT-Streaming-Dienstes darstellt, das durch vier Schichten modelliert ist, die sich jeweils in den Händen der zuständigen Infrastruktur-Beteiligten befinden.

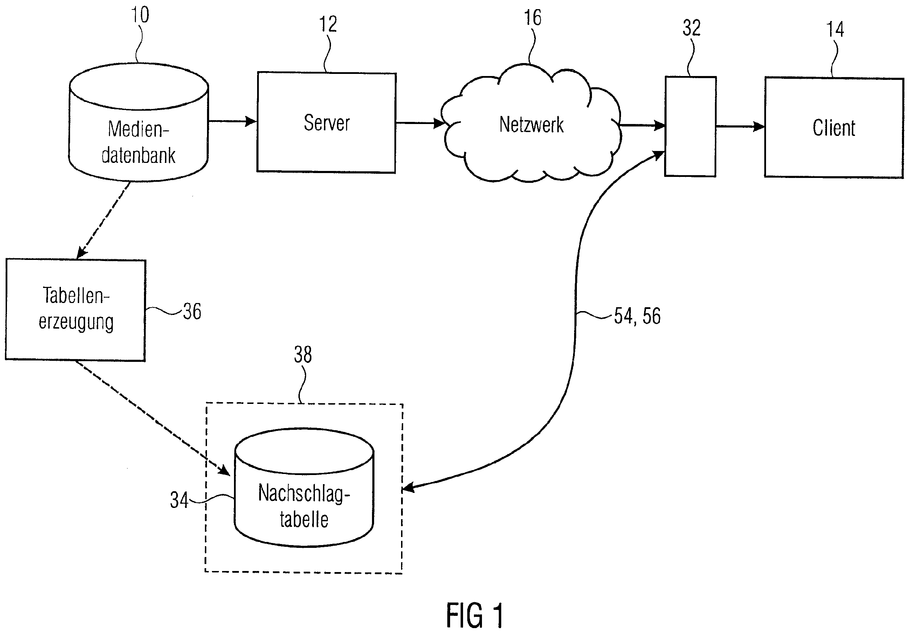

Fig. 1 zeigt eine Umgebung mit einem Server und einem Client, in welcher ein Konzept zur Bestimmung einer Qualität eines Mediadatenstroms gemäß einem Ausführungsbeispiel der vorliegenden Anmeldung verwendet wird. Fig. 1 zeigt insbesondere eine Übertragungsstrecke, wie sie in Fig. 11 gezeigt worden ist, mit einer Mediendatenbank 10, in welcher Mediainhalte vorkodiert gespeichert sind, einem Server 12, der Zugriff auf die Mediadatenbank 10 besitzt, und einem Client 14, der mit dem Server 12 über ein Netzwerk 16 kommunikativ verbunden ist. Bei dem Client 14 handelt es sich beispielsweise um ein auf einem Endgerät eines Benutzers ablaufendes Computerprogramm bzw. eine Applikation. Bei dem Endgerät kann es sich beispielsweise um ein mobiles Endgerät, wie z.B. ein Mobiltelefon, ein Notebook oder dergleichen handeln. Das Netzwerk 16 kann einen drahtgebundenen Anteil und/oder einen drahtlosen Anteil aufweisen. Der Server 12 ist beispielsweise ein Computer oder ein Computernetzwerk und die Mediadatenbank 10 umfasst beispielsweise eine oder mehrere Festplatten oder andere nicht-flüchtige Speicher.

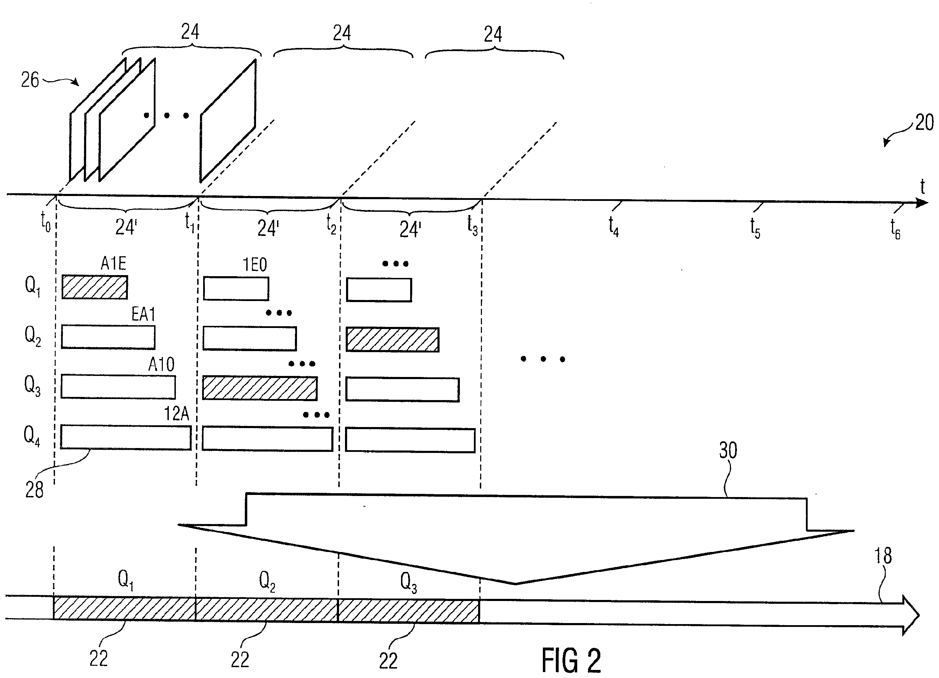

Im Rahmen der Kommunikation zwischen Server 12 und Client 14 sendet der Server 12 beispielsweise einen Mediadatenstrom über das Netzwerk 16 zu dem Client 14. Die folgende Beschreibung nimmt exemplarisch an, dass es sich bei dem Mediadatenstrom um einen Videodatenstrom handelt, der als Mediainhalt ein Video darstellt, aber es wird darauf hingewiesen, dass nachfolgende Ausführungsbeispiele ohne Weiteres auch auf andere Mediainhalte bzw. andere Mediadatenströme übertragbar sind, wie z.B. Audioinhalte, 3D-Gittermodelle oder dergleichen. Fig. 2 veranschaulicht exemplarisch den Mediadatenstrom 18 und den damit übertragenen Mediainhalt 20, hier, wie gesagt, exemplarisch ein Video.

Wie es in Fig. 2 gezeigt ist, umfasst der Mediadatenstrom 18 eine Sequenz von Datenstromabschnitten 22, in die unterschiedliche Mediaabschnitte 24 des Mediainhalts 20 in über den Mediainhalt hinweg variierender Qualität-zu-Bitrate kodiert sind. Das Video 20, das in Fig. 2 als Beispiel für ein zeitveränderliches Mediensignal dient, ist in Fig. 2 beispielsweise als in die Mediaabschnitte 24 unterteilt dargestellt, indem direkt aneinander angrenzende aufeinanderfolgende Zeitabschnitte des Videos die einzelnen Mediabschnitte 24 bilden. Jeder Mediaabschnitt 24 umfasst also eine jeweilige Sequenz von Bildern 26 des Videos 20.

Die Variation der Qualität-zu-Bitrate, mit welcher die Abschnitte 24 in die Datenstromabschnitte 22 kodiert sind, wird beispielsweise nach geeigneten Kriterien gesteuert, um auf Seiten des Clients 14 ein Leerlaufen eines Datenstrompuffers, einen sogenannten "Stall", in der Echtzeitwiedergabe des Mediainhalts bzw. Videos 20 am Client 14 zu vermeiden sowie andererseits ein Überfüllen des Puffers. Bei dem adaptiven Streaming kann es sich beispielsweise um http-basiertes Streaming des Mediadatenstroms 18 handeln, wie z.B. DASH, wonach der Server 12 dem Clienten 14 über sogenannte MPDs, Media Presentation Description, Informationen über zur Verfügung stehende downloadbare Qualität-zu-Bitrate-Stufen liefert. Auf Basis dieser Stufen kann ein im Client 14 befindliches Einstellungsmodul die Auswahl unter den zur Verfügung stehenden Stufen abhängig von Schätzungen über die effektiv zur Verfügung stehende Übertragungsbandbreite von Server 12 zu Client 14 und abhängig von einem aktuellen Pufferfüllstand am Client 14 durchführen und verändern.

Wie es in Fig. 2 gezeigt ist, ist in der Mediadatenbank 10 beispielsweise für jede einer Mehrzahl von Qualität-zu-Bitrate-Stufen Q₁-Q₄ für jeden Mediaabschnitt 24 ein Datenstromabschnitt gespeichert. Diese sind in Fig. 2 mit Rechtecken 28 veranschaulicht. Der tatsächlich für einen Clienten 14 ausgegebene Mediadatenstrom 18 setzt sich somit aus einer Sequenz bzw. einen Strom von Datenstromabschnitten 22 zusammen, wobei jeder Datenstromabschnitt 22 einem unterschiedlichen der Mediaabschnitte 24 zugeordnet ist, und einem der für diesen Mediaabschnitt 24 zur Verfügung stehenden gespeicherten Datenstromabschnitten 28 entspricht. In Fig. 2 ist exemplarisch dargestellt, dass die Medienabschnitte 24 zwischen den Zeitpunkten t₀, t₁, t₂ und t₃ in dem Mediadatenstrom 18 mit den Qualitätsstufen Q₁, Q₃ und Q₂ übertragen werden, aber wie gesagt, diese Auswahl ist situationsabhängig für die einzelnen Clienten 14. In Fig. 2 ist die situationsabhängige Qualität-zu-Bitrate-Einstellung mit dem Pfeil 30 angedeutet. Sie kann, wie beschrieben, beispielsweise durch den Clienten 14 vorgenommen werden.

Um die Qualität des Mediadatenstroms am Client 14 oder einem anderen Ort inmitten der Übertragungsstrecke zwischen Server 12 und Client 14 zu bestimmen, sieht das nachfolgend beschriebene Konzept zur Qualitätsbestimmung vor, dass eine Vorrichtung 32 aus den Datenstromabschnitten 22 Kennungen ableitet, um anhand derselben in einer Nachschlagtabelle 34 nachzuschlagen, um für die Datenstromabschnitte 22 Parametersätze zu erhalten, letztere für einen oder mehrere Test- oder Analyseabschnitte zu sammeln und daraus die Qualität zu bestimmen. Wie es aus der Beschreibung deutlich werden wird, müssen dazu die in der Mediadatenbank 10 gespeicherten Datenstromabschnitte 28 nicht verändert werden, was die Einführung des Qualitätsbestimmungskonzeptes in die existierende Infrastruktur von Mediaservern erleichtert. Zudem müssen keine sonstigen Informationen zusätzlich in die Server-Client-Kommunikation eingeführt werden. Diese bleibt unberührt. Die Erzeugung des Inhalts der Nachschlagtabelle 34 geschieht vorab, offline, über eine Tabellenerzeugung 36, was den Qualitätsbestimmungsaufwand auf Seiten der Vorrichtung 32 relativ gering hält. Trotzdem ermöglicht das nachfolgend näher beschriebene Konzept zur Qualitätsbestimmung eine Qualitätsbestimmung in einer Form, die die Voraussetzung bildet, um mit subjektiven Qualitätstestverfahren abgleichbar zu sein, wie z.B. die Qualitätsbestimmung über einen bestimmten Test- oder Analyseabschnitt bzw. ein vorbestimmtes Zeitintervall hinweg, das sich beispielsweise über mehrere Medienabschnitte 24 hinweg erstreckt, und zwar trotz der variierenden Qualitätsstufen Qᵢ der Sequenz von Datenstromabschnitten i(22).

Es sei bemerkt, dass die bisher erwähnten Mediaabschnitte 24 eigentlich unterschiedliche Bedeutung haben und nur der Einfachheit halber identisch beschrieben wurden: Mediaabschnitte, die getrennt voneinander in dem Mediadatenstrom kodiert sind, wie z.B. GOPs, und Mediaabschnitte für die jeweils Parametersätze in der Tabelle 34 vorliegen. Erstere sind beispielsweise GOPs, d.h. Bildsequenzen, die unabhängig voneinander dekodierbar sind, wie z.B. IPPP ... PP-Bildsequenzen oder dergleichen. In Einheiten solcher Mediainhalte könnte dann beispielsweise der Mediadatenstrom 18 seine Qualität-zu-Bitrate in den Stufen Q₁-Q₄ ändern. Für jeden solcher Mediaabschnitts 24 könnte eine Kennung erzeugt werden, d.h. die Granularität der Variation der Qualität-zu-Bitrate könnte gleich der Granularität der Kennungserzeugung sein. Das muss aber nicht sein. Die nachfolgenden Ausführungen machen deutlich, dass die Kennungserzeugung beispielsweise in kleineren Einheiten stattfinden kann, wie z.B. für jedes Bild 26. Mediaabschnitte mit dem Bezugszeichen 24' sollen sich immer auf einen solchen Abschnitt des Mediainhalts 20 beziehen, der einem jeweiligen Datenstromabschnitt mit einer jeweiligen Kennung zugeordnet ist. Für eine GOP, d.h. eine in sich abgeschlossene, getrennt von den anderen GOPs dekodierbare Bildsequenz, würden dann also mehrere Mediaabschnitte 24', d.h. mehrere Bilder. mit mehreren Kennungen, und zwar für jede Qualität-zu-Bitrate-Stufe, existieren. Datenstromabschnitte 22 sollen immer diesen Mediaabschnitten 24' zugeordnet sein. Mediaabschnitte 24 ohne Apostroph hingegen bezeichnen solche Abschnitte, in Einheiten welcher die Bitrate variieren kann, wie z.B. GOPs. Wie gesagt könnten beiden Einheiten/Abschnitte zusammenfallen, aber dies muss nicht so sein und ist gemäß nachfolgender Ausführungsbeispiel auch nicht so, wenngleich sie ohne weiteres in dieser Hinsicht variierbar wären, und zwar mit allen Zwischenformen, z.B. Abschnitten 24', die größer als ein Bild, aber kleiner als eine GOP sind. In Fig. 2 könnte a es also auch für einen Abschnitt 24 M*N Datenstromabschnitte in der Datenbank geben, nämlich für N Qualitätsstufen und M Unterteilungen des Abschnitts 24 in Abschnitte 24'.

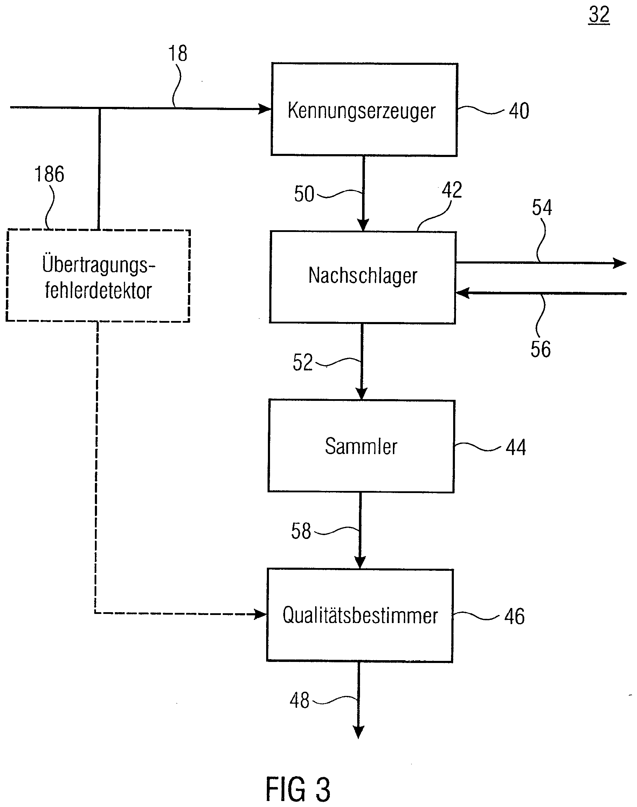

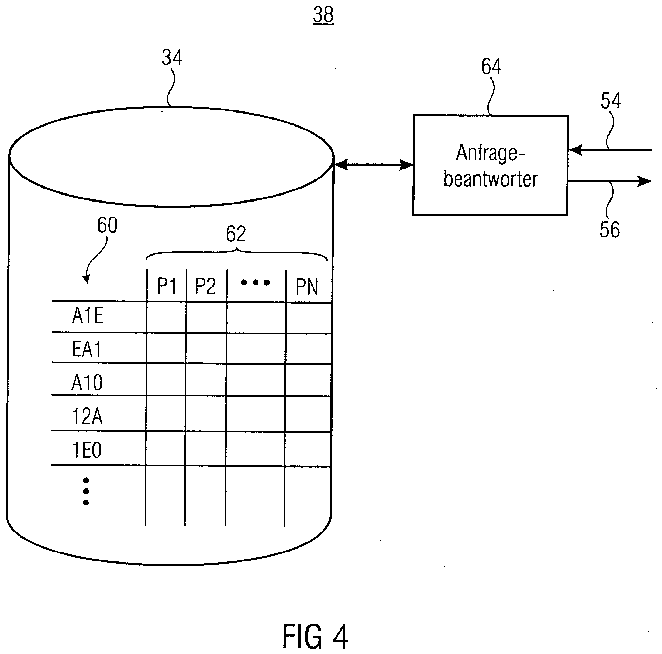

Anhand der Figuren 3 und 4 wird nun ein möglicher Aufbau der Vorrichtung 32 bzw. des die Nachschlagtabelle 34 aufweisenden Servers 38 beschrieben.

Wie es in Fig. 3 gezeigt ist, umfasst die Vorrichtung 32 einen Kennungserzeuger 40, einen Nachschlager 42, einen Sammler 44 und einen Qualitätsbestimmer 46. Wie es in Fig. 3 gezeigt ist, können die Elemente 40 bis 46 in Serie geschaltet sein, wobei der Kennungserzeuger 40 den Mediadatenstrom 18 empfängt und der Qualitätsbestimmer 46 die Qualität 48 des Mediadatenstroms ausgibt.

Der Kennungserzeuger 40 leitet aus jedem Datenstromabschnitt 22 des eintreffenden Mediadatenstroms 18 eine Kennung 50 für den jeweiligen Abschnitt 24' ab. Der Nachschlager 42 erhält die Kennungen 50 für die Datenstromabschnitte 22 des eintreffenden Mediadatenstroms 18. Er schlägt für jeden Datenstromabschnitt 22 in der Nachschlagtabelle 34 des Servers 38 nach, um für jeden Datenstromabschnitt 22 einen Parametersatz 52 zu erhalten, wobei der Nachschlager 42 das Nachschlagen anhand der für die Datenstromabschnitte 22 abgeleiteten Kennung 50 durchführt, indem er beispielsweise entsprechende Anfragen 54 an den Server 38 sendet und als Antwort 56 den Parametersatz zu der in der jeweiligen Anfrage enthaltenen Kennung erhält. Auf die Parametersätze der Datenstromabschnitte 22 wird im Folgenden noch näher eingegangen. Kurz ausgedrückt, handelt es sich hier um Messparameter, die pro Abschnitt 24', beispielsweise pro Bild 26, innerhalb des jeweiligen in dem jeweiligen Datenstromabschnitt 22 kodierten Mediainhalts 24' mehrere Parameter enthalten, die eine Kodierqualität des jeweiligen Bildes 26 beschreiben oder, besser ausgedrückt, eine Wiedergabequalität des betreffenden Bildes 26 für den Fall einer störungsfreien Übertragung, wobei die Parameter exemplarisch auch einen oder mehrere Parameter pro Abschnitt 24'aufweisen können, die die Qualität des Mediainhalts ohne Kodierstörungen beschreiben, d.h. des ursprünglichen Mediainhalts. Für nähere Details wird auf die nachfolgende Beschreibung verwiesen, wobei jedoch darauf hingewiesen werden soll, dass, wie bereits erwähnt, die vorliegende Anmeldung sowie die nachfolgend beschriebenen Ausführungsbeispiele nicht auf Videos eingeschränkt sind. So könnte es sich bei den Mediaabschnitten 24 auch um aufeinanderfolgende Zeitintervalle eines Audiosignals handeln, oder um Zeitabschnitte eines zeitlich veränderlichen Gittermodells oder dergleichen. Allgemein beschreibt der Parametersatz für den zugeordneten Datenstromabschnitt 22 eine Kodierqualität, d.h. eine Abweichung des aus dem Datenstromabschnitt 22 wiedergebbaren Mediainhalts 24' mit dem ursprünglichen, nicht durch verlustbehaftete Kodierung eingefügten Kodierfehler, und optional eine Qualität des Mediainhalts 24' generell.

Der Sammler 44 sammelt die Parametersätze 52 für einen gewünschten Test- oder Analyseabschnitt. Ein Testabschnitt erstreckt sich beispielsweise über eine Folge von Medienabschnitten 24 und damit auch eine Folge von Abschnitten 24'. Bezogen auf Fig. 2 könnte sich ein Testabschnitt beispielsweise von dem Zeitpunkt t₀ bis zu dem Zeitpunkt t₆ erstrecken. Die Länge des Testintervalls erfüllt beispielsweise das Kriterium, dass an entsprechende subjektive FR-Qualitätstestverfahren gestellt wird, wie z.B. Kriterien einer bestimmten Mindestzeitdauer, an Kontinuität, d.h. das Nicht-Vorhandensein von zeitlichen Lücken, usw. Der Sammler 44 gibt also eine Sammlung 58 von Parametersätzen 52 aus, die für Datenstromabschnitte 22 nachgeschlagen wurden, die Medienabschnitte 24' übertragen, die in einem Testabschnitt des Mediensignals liegen, wie z.B. zwischen t₀ und t₆ in Fig. 2. Wie es sich aus bisheriger Beschreibung schon ergab, können die gesammelten Parametersätze 52 zu unterschiedlichen Qualitätsstufen stammen.

Der Qualitätsbestimmer 46 erhält also eine Mehrzahl von Sammlungen 58, nämlich für all die Medienabschnitte 24', die in dem betreffenden Testabschnitt des Mediainhalts 20 liegen, und bestimmt auf Basis dieser Sammlung 58 von Parametersätzen 52 die Qualität 48, wobei Einzelheiten hierzu im Nachfolgenden noch näher beschrieben werden.

Lediglich der Vollständigkeit halber veranschaulicht Fig. 4 den Server 38 aus Fig. 1, der die Nachschlagtabelle 34 umfasst. In der Nachschlagtabelle 34 ist für jeden Datenstromabschnitt 28 in der Mediendatenbank 10 die Kennung 60 gespeichert, wie sie von dem Kennungserzeuger 40 in dem Fall einer fehlerfreien Übertragung als ein Abschnitt 22 des Datenstroms 18 erzeugt wird, sowie der Parametersatz 62, der diesem Datenstromabschnitt zugeordnet ist bzw. aus dem diesem Datenstromabschnitt 28 zugeordneten Medienabschnitt 24' erzeugt worden ist. Wie es in Fig. 4 angedeutet ist, kann jeder Parametersatz 62 beispielsweise N unterschiedliche Parameter aufweisen. Die Parametersätze 62 beziehen sich auf einen Mediaabschnitt 24, also beispielsweise jeweils auf ein Bild 26, und mehrere Mediaabschnitte 24' können in einem Medienabschnitt 24 liegen, in Einheiten welcher ein Client in der abgerufenen Bitrate bzw. Qualität variiert. Der Server 38 umfasst einen Anfragebeantworter 64, der mit der Nachschlagtabelle 34 verbunden ist, und ausgebildet ist, um auf eine Anfrage 54 von der Vorrichtung 32, die eine bestimmte Kennung aufweist, mit eben jenem Parametersatz 62 zu antworten, der in der Tabelle 34 für eben diese Kennung gespeichert ist, um in einer Rücksendung 56 genau diesen Parametersatz an die Vorrichtung 32 zurückzusenden.

Die Kommunikation 54 und 56 zwischen Vorrichtung 32 und Server 38 kann beispielsweise ebenfalls über das Netzwerk 16 stattfinden, wie z.B. über eine Internetverbindung. Der Server 38 kann ein eigener Server sein, getrennt von dem Server 12 und der Mediendatenbank 10. Die Nachschlagtabelle 34 kann beispielsweise in einem nicht-flüchtigen Speicher realisiert sein, und der Anfragebeantworter 64 kann beispielsweise durch einen Computer oder ein Computernetzwerk implementiert sein. Die Vorrichtung 32 könnte eine Applikation sein, die am Mobilgerät ausgeführt wird, auf dem auch der Client 14 ausgeführt wird, aber eine andere Anordnung und Implementierung der Vorrichtung 32 ist natürlich ebenfalls möglich.

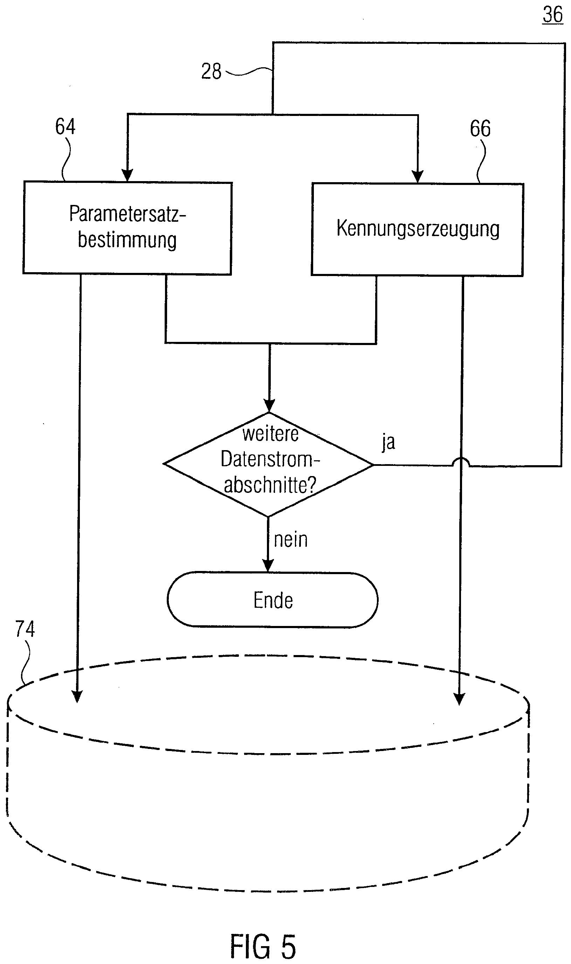

Wie es aus der vorhergehenden Beschreibung bereits deutlich wurde, besteht ein Vorteil der Vorgehensweise des Nachschlagens der Parametersätze mittels der aus den Datenstromabschnitten gewonnen Kennung darin, dass die Parametersatzbestimmung und damit der Aufbau der Nachschlagtabelle 34, d.h. die Tabellenerzeugung 36, offline vorab durchgeführt werden kann, d.h. vor den tatsächlich stattfindenden Medienstromübertragungen an die Clients 14. Der Vollständigkeit halber zeigt nun Fig. 5 eine Möglichkeit für die Tabellenerzeugung 36. Nach dieser Möglichkeit wird für jeden Datenstromabschnitt 28 in der Mediendatenbank 10 zum einen eine Kennungserzeugung 66 durchgeführt, und zwar so, dass die gleiche Kennung entsteht wie bei dem Kennungserzeuger 40 in dem Fall einer ungestörten Übertragung, sowie eine Parametersatzbestimmung 68.

Nachdem nun anhand der Figuren 1 bis 5 ein Überblick über die beteiligten Elemente in dem Qualitätsbestimmungskonzept vorgestellt worden ist, wird im Folgenden exemplarisch dargelegt, wie dieses Konzept bzw. Zusammenspiel von Elementen beispielsweise konkret ausgeführt sein kann. Dabei werden konkretere Ausführungen beispielsweise bezogen auf die Parametersätze getätigt, aber auch im Bezug auf andere im Vorhergehenden beschriebene Elemente, und all diese Konkretisierungsmöglichkeiten sollen so verstanden werden, dass sie individuell auf die obige bisherige Ausführung anwendbar sind. Es wird deshalb im Folgenden auch immer wieder Bezug auf die Figuren 1 bis 5 genommen werden und, soweit möglich, werden die Bezugszeichen wiederverwendet, wie sie bei der Beschreibung der Figuren 1 bis 5 verwendet worden sind.

Wie es in der Beschreibungseinleitung der vorliegenden Anmeldung beschrieben worden ist, besteht eine wichtige Frage bei Mediadatenübermittlungen darin, wie denn die tatsächlich ankommende Qualität der Mediadaten beim Endbenutzer ist. Die Bestimmung kann nun, wie Bezug nehmend auf die vorhergehenden Figuren bereits grob erläutert bestimmt werden, stattfinden, indem auf vorab gewonnen Parameter zugegriffen wird. Wie in Fig. 1 beschrieben sind hierzu ein Tabellenerzeugungsmodul 36, das die Mediendatenbank 10 analysiert, die Nachschlagtabelle 34, die eine Datenbank zum Speichern der aus der Mediadatenbank 10 berechneten Parametersätze vorsieht, sowie die Vorrichtung 32 beteiligt, d.h. eine beispielsweise auf Clientenseite eingesetzte Vorrichtung zur Berechnung der aktuellen Qualität.

Bei der Beurteilung der Gesamtqualität der Mediendaten beim Endbenutzer bzw. Client 14 sind prinzipiell zwei Störungsmuster zu beachten:
1) Die Kodierqualität, die vom verwendeten Kodierverfahren und den verwendeten Einstellungen, wie z.B. der mittleren Bitrate u.a. abhängig ist, und
2) die Übertragungsqualität, die momentane Störungen im Übertragungskanal beschreibt. Die Übertragungsqualität berücksichtigt Störungen, wie z.B. Paketverluste, Bitfehler u.a.

Die bisherige Beschreibung der Figuren 1 bis 5 griff eigentlich bisher nur die Kodierqualität auf. Wenn beispielsweise die Kennungserzeugung, wie beschrieben, exemplarisch in der nicht-dekodierten Domäne stattfindet, dann ist hierdurch schon hinreichend sichergestellt, dass defekte Datenstromabschnitte zu erkennbar falschen Kennungen führen, weil sie beispielsweise für den jeweils zugeordneten Medienabschnitt 24 zu keinem der für diesen Medienabschnitt 24 in der Nachschlagtabelle 34 gespeicherten Datenstromabschnitten 28 des aktuellen Mediainhalts 20 passt. Wie es im Folgenden beschrieben werden wird, wäre es möglich, dass der Qualitätsbestimmer 46 die für einen Testabschnitt oder mehrere Testabschnitte aus einer entsprechenden Sammlung 58 von Parametersätzen 52 bestimmte Qualität, die die Kodierqualität widerspiegelt, mit Schätzungen über eine Quantität von Qualitätsstörungen kombiniert, um zu einer Gesamtqualität zu gelangen.

Die Zerlegung der Gesamtqualität eines Signals in die vorgeschriebenen Teilbereiche Kodierqualität und Übertragungsqualität ermöglicht es objektiven Verfahren, die zur Qualitätsvorhersage notwendige Rechenleistung zu optimieren. Zu beachten ist hierbei, dass die Kodierqualität nicht von den aktuellen Störungen im Übertragungskanal abhängt. Deshalb wäre es prinzipiell möglich, diese für verschiedene Eingangssequenzen und Kodiereinstellungen im Vorfeld komplett zu berechnen, d.h. über ganze Testabschnitte hinweg. Wie in der Beschreibungseinleitung der vorliegenden Anmeldung beschrieben, ist dies jedoch schon deshalb schwierig, weil die Bitrate in zeitlichen Einheiten Client-individuell variiert, die kleiner als ein Testabschnitt ist. In anderen Worten ausgedrückt ändern sich die Kodiereinstellungen abhängig von einem aktuellen Zustand des Übertragungskanals ständig. Zusätzlich ist die Gesamtqualität auch nicht nur eine lineare Verknüpfung zwischen den oben genannten Qualitätsstufen. Deshalb ist es sinnvoller, Eckdaten, im Vorhergehenden mit "Parameter" und im Folgenden auch manchmal mit "Indikatoren" bezeichnet, im Vorfeld zu bestimmen und diese dann abhängig von der tatsächlichen Übertragungscharakteristik zur Abschätzung der Qualität heranzuziehen.

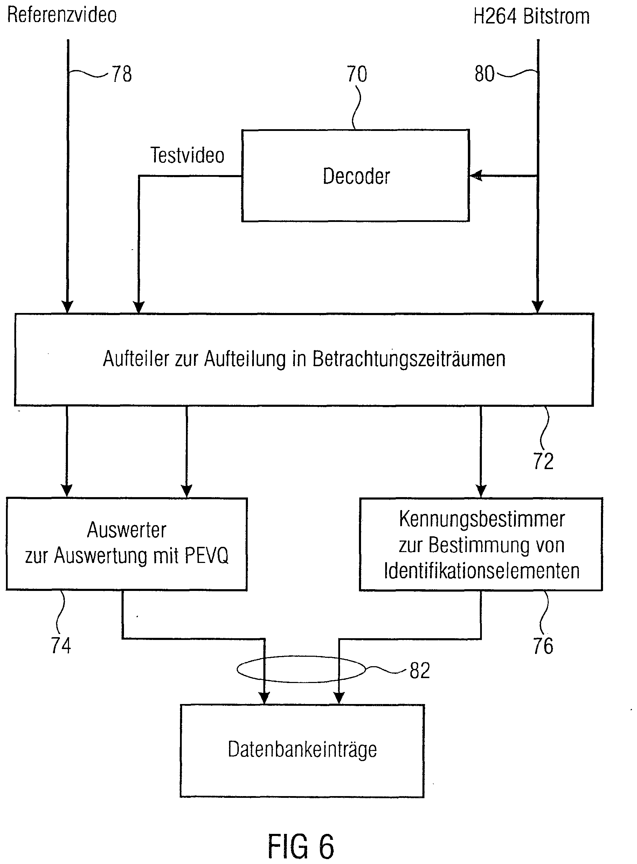

Fig. 6 zeigt eine Vorrichtung zur Bestimmung der Parametersätze im Vorfeld für eine Medienübertragung am Beispiel eines Videos als Mediainhalt, also eine Vorrichtung, die geeignet ist, die Tabellenerzeugung 36 durchzuführen.

Wie es zu sehen ist, umfasst die Vorrichtung von Fig. 6 einen Dekoder 70, einen Aufteiler 72, einen Auswerter 74, einen Kennungsbestimmer 76 sowie einen Eingang 78 zum Empfang eines Referenzmediainhalts, nämlich hier eines Referenzvideos, einen Eingang 80 zum Empfang eines Mediadatenstroms mit konstanter Qualität-zu-Bitrate-Stufe sowie einen Ausgang 82 zur Ausgabe der Datenbank- bzw. Nachschlagtabelleneinträge der Nachschlagtabelle 34, d.h. der Paare von Kennungen 60 und zugehörigen Parametersätzen 62. Der Aufteiler 72 weist drei Eingänge auf, einen Eingang, der mit dem Eingang 78 verbunden ist, einen weiteren Eingang, der direkt mit dem Eingang 80 verbunden ist, sowie einen dritten Eingang, der über den Dekoder 70 mit dem Eingang 80 verbunden ist, um eine dekodierte bzw. wiedergebbare Fassung des Mediadatenstroms am Eingang 80 zu erhalten, der, wie in Fig. 6 angedeutet, beispielsweise mittels H.264 kodiert sein kann, so dass am Ausgang des Dekoders 70 ein Testvideo am Eingang des Aufteilers 72 anliegt. Der Aufteiler 72 teilt eingehendes Referenzvideo, eingehendes Testvideo und eingehenden Mediadatenstrom in Betrachtungszeiträume ein, die im Wesentlichen, wie z.B. von den Größen derselben her, den vorerwähnten Testabschnitten entsprechen, und gibt für jeden Betrachtungszeitraum den entsprechenden Datenstromabschnitt 22 des Mediadatenstroms am Eingang 80 an den Kennungsbestimmer 76 weiter, und die in dem jeweiligen Betrachtungszeitraum liegenden Mediaabschnitte 24', wie z.B. Einzelbilder 26, aus dem Testvideo sowie die entsprechenden Abschnitte, wie z.B. Bilder, aus dem Referenzvideo an den Auswerter 74. Im Folgenden wir der Einfachheit halber davon ausgegangen, dass die Einteilung in Betrachtungszeiträume lückenlos stattfindet, so dass die Betrachtungszeiträume nahtlos einander angrenzen, aber Abweichungen hiervon sind ebenso denkbar.

Der Kennungsbestimmer 76 bestimmt für alle eingehenden Datenstromabschnitte 22 die Kennung, ebenso bzw. mit der gleichen Abbildung, wie dies auch der Kennungserzeuger 40 innerhalb der Vorrichtung 32 tut. Es sei erwähnt, dass die Kennungserzeuger eine Hashwertbildung umfassen kann, aber die Kennung könnte auch eine Zusammensetzung aus Hashwert und weiteren IDs sein, die beispielsweise den einzelnen Mediainhalten in der Mediathek 10 zur Unterscheidbarkeit zugewiesen sind.

Die Auswertung innerhalb des Auswerters 74 geschieht, wie noch nachfolgend näher erläutert, und führt für jeden Mediaabschnitt 24' aus jedem Betrachtungszeitraum zu einem entsprechenden Parametersatz, der der Kennung zugeordnet ist, die aus dem Datenstromabschnitt 22 erhalten worden ist, in dem der entsprechende Mediainhalt 24' kodiert ist.

Der soeben beschriebene Vorgang wird für jede der Qualität-zu-Bitrate-Stufen, in der ein jeweiliger Mediainhalt bzw. ein jeweiliges Video 20 in der Mediendatenbank 10 vorliegt, wiederholt, indem der entsprechende Mediadatenstrom 18 an den Eingang 80 angelegt wird, während das Referenzvideo am Eingang 78 anliegt und den Mediainhalt ohne Kodierverluste darstellt. Jedes Mal bleibt die Qualität-zu-Bitrate-Stufe konstant. Genauer ausgedrückt, repräsentiert jedes Mal jeder Datenstromabschnitt 22 des Mediadatenstroms 18 am Eingang 80 den zugehörigen Mediaabschnitt 24' in einer für alle Datenstromabschnitte 22 gleichen Qualität-zu-Bitrate-Stufe, wobei die Stufe zwischen den aufeinanderfolgenden Malen geändert wird. Auf diese Weise entstehen in der Nachschlagtabelle, wie bereits beschrieben, für jede Qualität-zu-Bitrate-Stufe für jeden Mediaabschnitt 24' des Mediainhalts 20 ein Paar von Kennung und zugehörigem Parametersatz.

Im Prinzip übernimmt also der Auswerter 74 aus Fig. 6 die Parametersatzbestimmung 64 aus Fig. 5 und der Kennungsbestimmer 76 die Kennungserzeugung 66 aus Fig. 5. Der Aufteiler 72 führt eine Aufteilung in Betrachtungszeiträume durch, die bei dem Ausführungsbeispiel von Fig. 6 im Zusammenhang mit der Auswertung stehen, die der Auswerter 74 durchführt, um die Parametersätze zu erhalten. Bei den Betrachtungszeiträumen handelt es sich um solche, die die gleichen Kriterien erfüllen können, wie sie zur Auswahl eines Testabschnittes durch den Qualitätsbestimmer 46 in der Vorrichtung 32 verwendet werden. Ein Betrachtungszeitraum kann sich also beispielsweise über mehrere Medienabschnitte 24 hinweg erstrecken. Trotzdem erzeugt der Auswerter 74 aus der Auswertung eines Betrachtungszeitraums einen Parametersatz pro Medienabschnitt 24', der in dem aktuellen Betrachtungszeitraum liegt.

Genauer ausgedrückt, dienen also als Eingabe für die Vorrichtung von Fig. 6 ein Referenzvideo sowie der zu übertragene Mediadatenstrom mit einer jeweiligen konstanten Qualität-zu-Bitrate-Stufe und das aus dem Mediadatenstrom dekodierte Testvideo in Originallänge. Der Auswerter 74 kann ein objektives Testverfahren, wie z.B. ITU-T J.247 oder ITU-T J.341, verwenden, um einen subjektiven Test abzubilden. Solche objektiven Testverfahren sind für Bildsequenzen, die in einem solchen Test eingesetzt werden, abgeglichen. Die Dauer einer solchen Bildsequenz bzw. eines solchen Betrachtungszeitraums liegt beispielsweise zwischen 10 und 16 Sekunden oder zwischen 6 und 20 Sekunden, jeweils einschließlich. Der Aufteiler 72 teilt also beispielsweise Referenzvideo, Testvideo und eingehenden Mediadatenstrom in solche Betrachtungszeiträume ein und führt Referenz- und Testvideo solchermaßen unterteilt dem Auswerter 74 zu. Innerhalb des objektiven Messverfahrens im Auswerter 74 werden dann für jeden Mediaabschnitt 24' im Betrachtungszeitraum 72, beispielsweise für jedes Bild 26 innerhalb des jeweiligen Betrachtungszeitraums 72, die Parameter bzw. Indikatoren bestimmt, d.h. ein Parametersatz. Eine genauere Beschreibung des möglicherweise einsetzbaren Verfahrens zum Extrahieren der Parametersätze erfolgt im Folgenden noch. Es folgt im Folgenden auch noch eine Beschreibung der Parameter bzw. Indikatoren.

Ebenso wie bei der Auswertung der Betrachtungszeiträume, in welche Referenzvideo und Testvideo durch den Aufteiler 72 aufgeteilt werden, für jeden Abschnitt 24', wie z.B. für jedes Bild, ein Parametersatz entsteht, erzeugt der Kennungsbestimmer 76 für jeden Medienabschnitt 24', z.B. für jedes Bild 26, aus dem jeweiligen Datenstromabschnitt 22 eine Kennung, die im Folgenden auch als Identifikationselement bezeichnet wird. Die Identifikationselemente werden zu den Abschnitten 24' so errechnet, dass später eine genaue Zuordnung des im Bitstrom 18 kodierten Abschnitts 24' zu den Datenbankeinträgen möglich ist. Als Identifikationselement kann beispielsweise eine MD5-Summe oder eine andere eindeutig zu bestimmende "HASH"-Summe eingesetzt werden.

Anschließend werden, wie es im Vorhergehenden bereits beschrieben wurde, die Indikatoren bzw. der Parametersatz zusammen mit der "HASH"-Summe und optional möglicherweise weiteren Steuerelementen, wie z.B. Informationen über die Bildgeometrie, in einer Datenbank abgelegt. In der Datenbank 34 stehen somit alle notwendigen Informationen zur Bestimmung der Kodierqualität für eine Vielzahl von Videosequenzen und Kodiereinstellungen auf Einzelbildebene zur Verfügung.

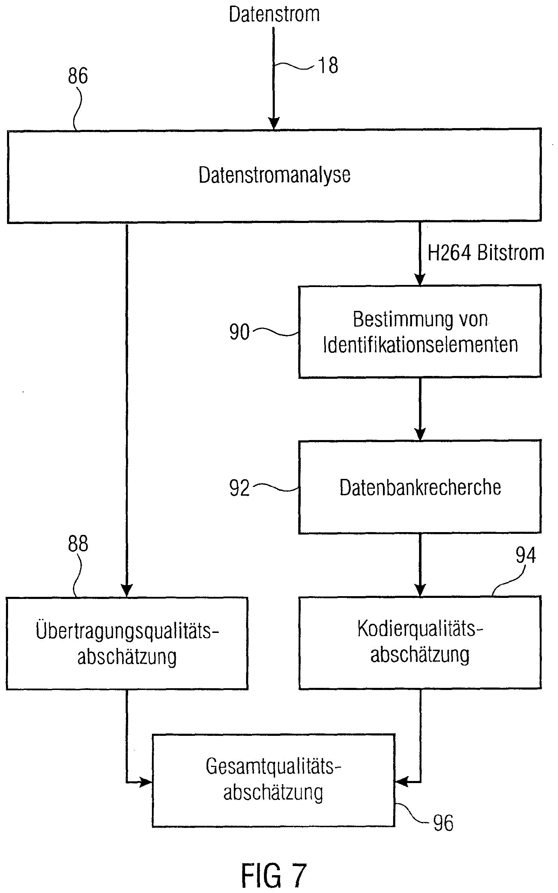

Fig. 7 zeigt ein Verfahren zur Abschätzung einer Gesamtqualität eines aktuell übertragenen Signals bzw. eines an einen Clienten 14 übertragenen Mediadatenstroms 18. Es wird von der Vorrichtung 32 ausgeführt, wie z.B. derjenigen, von Fig. 3, wobei allerdings zur Durchführung des Verfahrens von Fig. 7 die Funktionalität von Fig. 3 ergänzt wird, wie es im Folgenden noch beschrieben wird. Wie bereits erwähnt, sind die Ausführungen für einen Videostrom veranschaulicht, obwohl sie ohne Weiteres auch auf andere Mediainhalte als ein Video übertragbar sind.

Wie es in Fig. 7 gezeigt ist, wird der eingehende Mediadatenstrom 18 zunächst einer Datenstromanalyse 86 unterzogen, wobei, wie bereits oben erwähnt, der Datenstrom 18 beispielsweise derjenige ist, der beim Empfänger oder allgemein ausgedrückt empfangsseitig, wie z.B. an einem Client 14, ankommt. Um den Mediendatenstrom 18 zu erhalten, können beispielsweise die Daten von der Netzwerkkarte abgegriffen werden. Bei der Datenstromanalyse 86 werden die videorelevanten Daten bzw. wird der Mediendatenstrom 18, der hier exemplarisch ein Videodatenstrom ist, auf Übertragungsfehler, wie z.B. Paketverluste, Bitfehler, zeitliche Verzögerungen, Paketwiederholungen oder Ähnliches hin analysiert. Die Analyse kann beispielsweise in einem dem Kennungserzeuger 40 parallel geschalteten, bzw. ebenfalls den Mediadatenstrom 18 erhaltenden Übertragungsfehleranalysierer oder - detektor 186 durchgeführt werden. Anhand des Analyseergebnisses kann dann in einem Schritt 88 die aktuelle Übertragungsqualität abgeschätzt werden, die die Störungen der Übertragungsstrecke beschreibt. Gleichzeitig wird aus dem eintreffenden Mediadatenstrom 18 die Folge von Datenstromelementen 22 extrahiert, die beispielsweise einen H.264-Bitstrom darstellt, anhand dessen Kennungen bzw. Identifikationselemente errechnet werden, und zwar pro Bildabschnitt 24', wie z.B. auf Bildebene bzw. pro Videobild. Die Kennungsbestimmung 90 wird beispielsweise von dem Kennungserzeuger 40 durchgeführt. Für die in Schritt 90 berechneten Identifikationselemente wird, wie bereits erwähnt, der gleiche Algorithmus bzw. die gleiche Abbildung wie für die Generierung der Datenbank in Schritt 66 bzw. in dem Kennungsbestimmer 76 eingesetzt. Daher kann, falls nicht aufgrund von Übertragungsstörungen die "HASH"-Werte bzw. die Kennungen nicht bestimmt werden können, eine eindeutige Zuordnung der Bildabschnitte 24' mit Einträgen in der Nachschlagtabelle 34 erfolgen, welcher Schritt in Fig. 7 mit Datenbankrecherche 92 bezeichnet ist, einem Schritt, der durch den Nachschlager 42 in Fig. 3 durchgeführt wird. Die für jeden Bildabschnitt 24', wie z.B. Bild 26, nachgeschlagenen Indikatoren bzw. Parametersätze werden dann zur Berechnung der aktuellen Kodierqualität herangezogen, nämlich in einem Schritt 94, der Kodierqualitätsabschätzung, der von dem Sammler 44 und Qualitätsbestimmer 46 in Fig. 3 durchgeführt wird. Notwendig ist hier lediglich, dass die Vorrichtung 32 Zugriff auf die im Vorfeld erstellte Datenbank 34 hat. Dies kann beispielsweise durch eine verlustfreie Datenleitung oder eine bereits vorab übertragene Datenbank 34 gewährleistet werden. Eine genauere Beschreibung des Vorgangs der Kodierqualitätsabschätzung 94 erfolgt im Folgenden noch.

An dieser Stelle ist auch anzumerken, dass die bisher beschriebenen Ausführungsbeispiele auch moderne Streaming-Verfahren, wie z.B. HLS (HTTP Live Streaming) unterstützen.

In einem Schritt 96 wird am Ende die Gesamtqualität auf Basis der abgeschätzten Kodierqualität und der abgeschätzten Übertragungsqualität aus den Schritten 88 und 94 abgeschätzt. Dieser Schritt kann beispielsweise ebenfalls durch den Qualitätsbestimmter 46 von Fig. 3 durchgeführt werden, ebenso wie die Übertragungsqualitätsabschätzung 88.

Obige Ausführungsbeispiele lösen also das Problem, dass adaptive Streaming-Verfahren je nach vorhandener Übertragungskanalkapazität unterschiedliche Kodierqualitäten einsetzen. Die Kodierqualität kann sogar während der Übertragung geändert werden, falls sich die Übertragungskanaleigenschaften ändern. Aufgrund des Einsatzes der Nachschlagtabelle 34, die alle möglichen Qualitätskombinationen auf Einzelbildebene speichert, können nach obigen Ausführungsbeispielen immer die passenden Indikatoren extrahiert werden.

Im Folgenden wird näher beschrieben, wie die Parametersatzbestimmung 64 ausgestaltet sein kann bzw. der Auswerter 74. Wie bereits beschrieben, können zur Extraktion der Indikatoren bzw. des Parametersatzes etablierte, standardisierte Messverfahren verwendet werden, die in der Praxis ihre gute Qualitätsvorhersage schon bewiesen haben. Beispielsweise kann das von der ITU unter dem Namen ITU-T J.247 standardisierte Verfahren verwendet werden. Der Vollständigkeithalher soll auch erwähnt werden, dass zur Gewinnung der Parametersätze auch andere, nicht-standardisierte Verfahren, oder auch NR Verfahren verwendet werden können, wobei dies im allgemeinen mit einer Verlußt and Messgenauigkeit einhergeht.

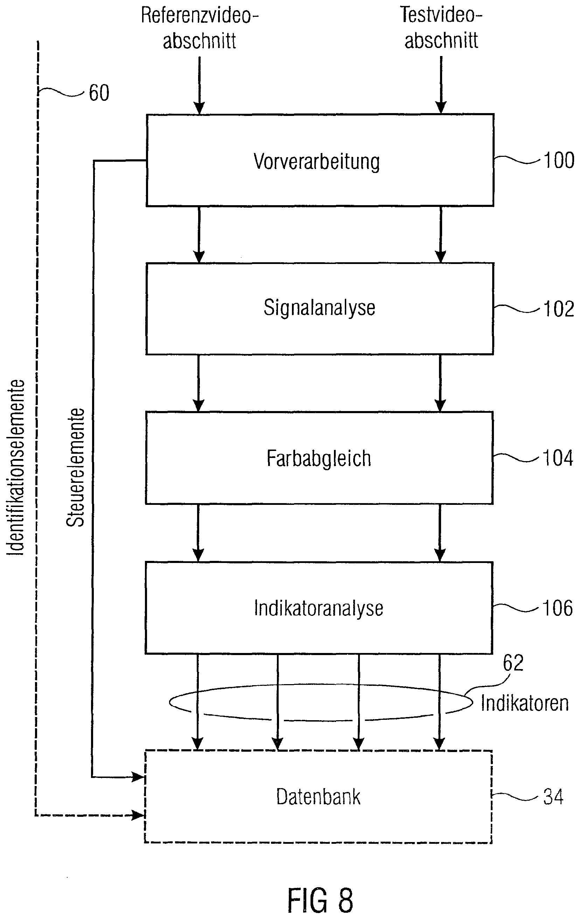

Fig. 8 zeigt exemplarisch einen möglichen Ablauf von Schritten, der insbesondere von dem Auswerter 74 von Fig. 6 durchgeführt werden könnte, wo ja davon ausgegangen wird, dass der Auswerter 74 zur Durchführung der Parametersatzbestimmung für einen Betrachtungszeitraum sowohl das aus dem empfangenen Mediadatenstrom 18 durch Dekodierung erhaltene Testvideo und das zugehörige Referenzvideo erhält. Die nachfolgenden Ausführungen werden jedoch deutlich machen, dass die Aufteilung in Betrachtungszeiträume bei der Erzeugung der Parametersätze nicht unbedingt erforderlich ist. Sie erleichtert lediglich die Verwendung vollstandardisierter Messverfahren zur Erzeugung der Parametersätze.

Als Eingabeparameter werden dem Parametersatzextraktionsverfahren von Fig. 8 die in Betrachtungszeiträume aufgeteilten zeitlichen Abschnitte aus dem Referenzvideo sowie der entsprechende, zu bewertende zeitliche Abschnitt aus dem möglicherweise mit einer Kodierstörung behafteten Video übergeben. Die Dauer des zeitlichen Betrachtungszeitraums bzw. Testabschnitts kann sich sowohl nach der typischen Dauer des subjektiven Testes, mit dem die objektiven Messverfahren bewertet werden, als auch nach den Anforderungen von Streaming-Verfahren, bei denen die möglichen Qualitätsumschaltabschnitte 24 festgelegt sind, richten. Bei dem HLS-Verfahren z.B. liegen die Transferabschnitte 24 als einzelne Dateien vor, so dass idealerweise ganzzahlige Vielfache dieser Längen gewählt werden. Typische Werte sind Abschnittslängen von beispielsweise 4 bis 14 Sekunden oder alternativ von 2 bis 25 Sekunden, einschließlich.

Es wird sichergestellt, dass zwischen dem dem Betrachtungszeitraum entsprechenden Abschnitt des Referenzvideos und dem des Testvideos kein zeitlicher Versatz besteht. Wenn notwendig wird ein Algorithmus zur zeitlichen Zuordnung der Einzelbilder eingesetzt.

Im Rahmen einer Vorbereitung 100, einem ersten Schritt, werden die einzelnen Abschnitte eingelesen und in die interne Bilddarstellung überführt. Dieser Schritt ist optional und kann entfallen, wenn keine Bilddarstellungsüberführung notwendig ist.

In einer Signalanalyse 102 werden dann die einzelnen Videoabschnitte, d.h. der jeweilige Betrachtungszeitraum bzw. der jeweilige Testabschnitt, auf Bildebene analysiert und charakterisiert. Hier erfolgt die Bildabfolgeanalyse, in der sich verändernde Bildfolgen und einzelne Standbildabschnitte erkannt werden. In diesem Block erfolgt die Analyse für Originalvideo und Testvideo getrennt.

In einem nachfolgenden Schritt 104 wird ein Farbabgleich durchgeführt. Er umfasst eine Histogrammanalyse der einzelnen Graustufen und Farbkomponenten, wobei anschließend die Verteilung zwischen Originalvideo und Testvideo angeglichen wird. Leicht unterschiedliche Systemfarbdarstellungen und Systemverzerrungen werden hier entfernt, da diese üblicherweise von einem Betrachter kaum erkannt werden. Die Entfernung führt dazu, dass die nachfolgende Indikatoranalyse 106 gegenüber diesen Farbfehldarstellungen und Verzerrungen unempfindlich ist.

Insbesondere wird bei der Indikatoranalyse 106 der für die Qualitätsbeurteilung relevante Satz von Störungselementen extrahiert, d.h. der Parametersatz. Berechnet wird jeweils für einen Abschnitt 24', also beispielsweise jeweils für ein Bild, im Testvideo, ein Parametersatz, so dass pro "Frame" ein Parametersatz zur Verfügung steht. Wie gesagt, ein anderes Beispiel, wonach der Medienabschnitt 24' größer ist als nur ein "Frame", wäre ebenfalls denkbar. Die Eigenschaften der Parameter bzw. Indikatoren werden nachfolgend genauer beschrieben.

Wie im Vorhergehenden beschrieben, wird hernach der Satz 62 von Parametern bzw. Indikatoren in die Datenbank bzw. Nachschlagtabelle 34 eingespeichert, und zwar zusammen mit, bzw. zugeordnet zu, der jeweiligen Kennung 60, die aus dem Datenstromabschnitt 22 gewonnen worden ist, die den jeweiligen Mediaabschnitt 24' in kodierter Form enthält, für den dieser Satz 62 bestimmt worden ist, hier eben beispielsweise ein einzelnes Bild. Wie es in Fig. 8 gezeigt ist, kann es sein, dass die Indikatoren des Satzes 62 zusammen mit Steuerelementen für spätere Nachverarbeitung zwischengespeichert werden. Beispiele für solche Steuerelemente wurden im Vorhergehenden bereits erwähnt. Der Aufbau der Datenbank bzw. Nachschlagtabelle 34 ist an dieser Stelle frei wählbar und richtet sich nach der Größe und vorhandenen Soft- und Hardwareanforderung. Als Beispiel einer Datenbank, die hier eingesetzt werden kann, kann MySQL erwähnt werden. Erwähnenswert ist, dass durch die Kennungserzeugung eine eindeutige Zuordnung zwischen Kennung 60, dem Bild bzw. Frame, d.h. dem Medienabschnitt 24' im Testvideo, sowie den zugehörigen Parametern bzw. dem Satz 62 von Parametern gewährleistet ist. Anzumerken ist noch, dass die einzelnen Indikatorwerte des Satzes 62 beispielsweise als IEEE-Fließkommazahl zur Verfügung stehen können. In dem Fall der Verwendung von J.247 zur Erzeugung der Parameter kann beispielsweise ein Datenbankeintrag 82 aus sechs Parametern für den Satz 62, einer Kennung 60 und optional einem Steuerelement bestehen.

Im Folgenden wird auf Möglichkeiten eingegangen, wie für die vorhergehenden Ausführungsbeispiele die Parameter gewählt werden könnten, d.h. um welche Maße es sich bei diesen Parametern handeln könnte, wie sie erzeugt werden usw. Es wird allerdings darauf hingewiesen, dass die nachfolgende Beschreibung lediglich exemplarisch ist und natürlich auch Abwandlungsmöglichkeiten existieren. Wie ebenfalls bereits im Vorhergehenden erwähnt, wird bei der nachfolgenden Beschreibung exemplarisch davon ausgegangen, dass die Parametersätze für Medienabschnitte 24' bestimmt werden, die einzelnen Bildern bzw. Frames 26 entsprechen. Die Berechnung erfolgt unter Verwendung oder in Anlehnung an J.247. Im Folgenden wird allerdings trotzdem nur skizziert, wie die Parameter für jedes Einzelbild im Testvideo, d.h. der rekonstruierten Version des Mediainhalts, berechnet werden. Für eine detaillierte, mathematische Beschreibung wird ergänzend auf die Empfehlung ITU-T J.247, nämlich Kapitel B.1.10, verwiesen, das hiermit unter Bezugnahme diesbezüglich aufgenommen wird.

Gemäß dem nachfolgend beschriebenen Ausführungsbeispiel wird also bei der Tabellenerzeugung 36 in Fig. 1 oder im Rahmen der Indikatoranalyse 106 oder durch den Auswerter 74 folgende Analyse durchgeführt, und zwar entweder eine oder mehrere oder alle der folgenden:

### Ähnlichkeitsanalyse:

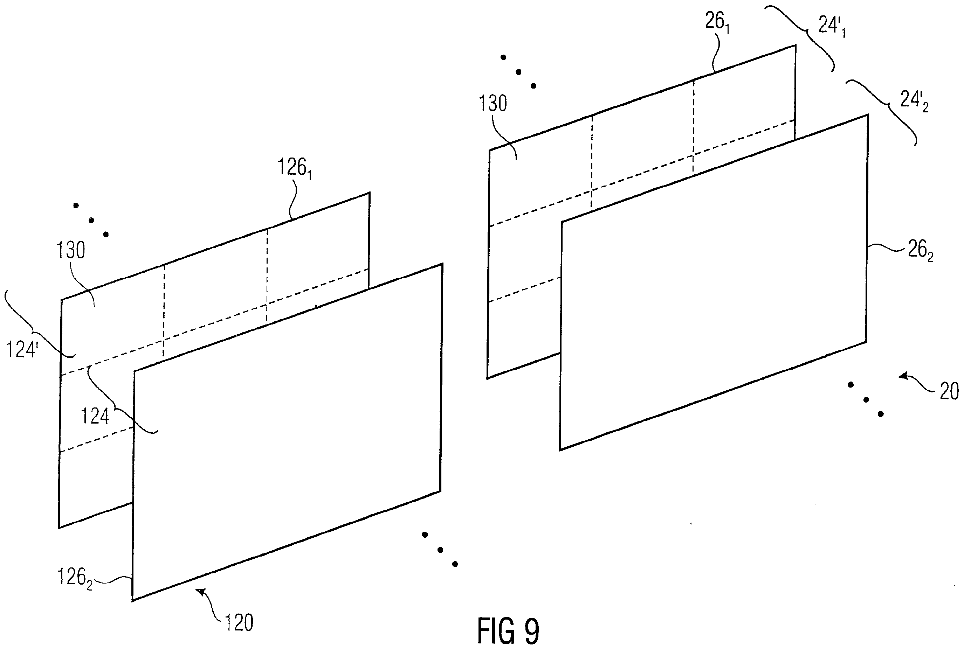

Im Rahmen einer Ähnlichkeitsanalyse wird beispielsweise ein korrelationsbasiertes Maß einer Ähnlichkeit zwischen einer rekonstruierten Version eines jeden Medienabschnitts 24', hier also exemplarisch eines jeden Bilds 26, des Videos 20 und einem korrespondierenden Abschnitt 124' eines Referenzvideos 120 bestimmt. Es sei noch mal erinnert, dass die Analyse i.A. offline stattfindet. Bei dem Video 20 handelt es sich um ein solches, das durch die Kodierung aus einem Mediadatenstrom hervorgeht, der aus einer Sequenz von Datenstromabschnitten mit konstanter Qualität-zu-Bitrate-Stufe besteht. Da es sich bei dem vorliegenden Ausführungsbeispiel bei den Mediaabschnitten 24' um einzelne Frames handelt, vergleicht also die Ähnlichkeitsanalyse ein Bild 26 des Testvideos 20 mit einem zeitlich korrespondierenden Bild 126 des Referenzvideos 120, das nicht durch Kodierverluste beeinträchtigt ist. Um die zeitliche Sequenz von Bildern 26 bzw. 126 im Testvideo 20 und Referenzvideo 120 zu veranschaulichen, sind in Fig. 9 exemplarisch mit Indices 1 und 2 zwei aufeinanderfolgende Bilder dieser Videos unterschieden und gezeigt. Zur Berechnung des korrelationsbasierten Maßes wird eine Korrelation zwischen beispielsweise Bild 26₁ und 126₁ über den Bildbereich hinweg an verschiedenen Bildausschnitten bestimmt und anschließend das korrelationsbasierte Maß auf Basis einer geeigneten Mittelung der örtlich gewonnenen Korrelationen bestimmt. Es wird also beispielsweise das Bild 26₁ aus dem Testvideo 20 und insbesondere aus dem Testabschnitt sowie das zeitlich korrespondierende Bild 126₁ des Referenzvideos 120 in einzelne Bildbereiche 130 aufgeteilt und jeweils die Korrelation zwischen in diesen Bereichen 130 zwischen Referenz- und Testvideo ermittelt, wobei beispielsweise der mittlere Korrelationswert als das Ähnlichkeitsmaß bzw. das korrelationsbasierte Maß bestimmt, um einen der Parameter zu erhalten. Störungen in den Flächenstrukturen der Bilder werden mit Hilfe dieses Indikators bzw. Parameters besonders hervorgehoben. Die Ähnlichkeitsanalyse wir für jeden Mediaabschnitt 24', hier also für jedes Frame 26, innerhalb des Testabschnittes bzw. Betrachtungszeitraums bestimmt.

### Kantenanalyse.

Die Kantenanalyse führt für jedes Bild 26 bzw. jeden Medienabschnitt 24' zu einem Maß für Unterschiede von in dem jeweiligen Bild 26 befindlichen Kanten und in dem korrespondierenden Bild 126 befindlichen Kanten. Die Kanten werden beispielsweise in der Luminanzebene bzw. aus der Lumakomponente der Bilder 26 und 126 bestimmt. Als Unterschiedsmaß wird beispielsweise die reine Subtraktion entsprechender Kantenbilder verwendet, die aus den Bildern 26 und 126 gewonnen werden. Eine geeignete Mittelung über den Bildbereich hinweg kann wiederverwendet werden, um zu dem einen Maß für den Kantenunterschied zu gelangen. Es kann sich beispielsweise um eine L5-Norm bei der Mittelung handeln. Anders ausgedrückt werden also bei der Kantenanalyse Kantenbilder in der Luminanzebene des Referenzbildes und Testbildes verglichen und auf Unterschiede untersucht. Die Mittelung der Störung zur Bestimmung des Indikatorwertes erfolgt eben beispielsweise über eine gewichtete L5-Norm. Beim Betrachten eines Bildes orientiert sich das Auge oft an den Kanten. Kantenstörungen werden daher besonders wahrgenommen.

### Blockanalyse:

Eine Blockanalyse führt zu einem Maß für Blockstörungen in jedem Bild 26 bzw. Mediaabschnitt 24' innerhalb des Testabschnitts. Blockbildung ist eine häufige Fehlerklasse, die bei modernen "Codecs" in Erscheinung tritt. Diese Störung wird auch als "blockiness" oder "tiling" bezeichnet. Die Berechnung des Fehlers erfolgt ähnlich wie in der Kantenanalyse. Jedoch werden für diesen Wert nur die im Testbild 26 im Vergleich zum Originalbild 126 hinzugefügten Kanten ausgewertet. Die örtliche Mittelung kann hier beispielsweise über eine gewichtete L2-Norm geschehen, um zu dem Maß für Blockstörungen zu gelangen. Wie die anderen Analysen, d.h. Ähnlichkeitsanalyse und Kantenanalyse, sowie die nachfolgenden Analysen auch, wird die Blockanalyse für jedes Bild 26 innerhalb des Betrachtungszeitraums bzw. des Testabschnitts durchgeführt.

### Chrominanzanalyse:

Eine Chrominanzanalyse führt zu einem Maß für einen Unterschied von Chrominanzebenen in dem jeweiligen Bild 26 und dem korrespondierenden Originalbild 126. Werte dieses Maßes bzw. Indikators basieren auf der Differenz der Chrominanzebenen der Bilder. Es erfolgt eine gewichtete Mittelung von beispielsweise einer Differenz der normierten Bildpunkte zwischen Original und Testbild zur Bestimmung des Indikatorwertes.

### Analyse des zeitlichen Verlaufs der Störung:

Eine Analyse des zeitlichen Verlaufs der Störung führt zu einem Maß für Unterschiede von zeitlichen Änderungen von Kanten, die sich in einem Bild 26 des Testvideos 20 befinden, und zeitlichen Änderungen von Kanten, die sich in dem korrespondierenden Bild 126 des Referenzvideos 120 befinden. Die zeitlichen Änderungen von Kanten des Bilds 26₂ des Testvideos 20 werden beispielsweise bestimmt, indem zunächst die Kantenbilder dieses Bildes 26₂ und des zeitlich vorhergehenden Bildes 26₁ bestimmt werden, wie z.B. wieder in der Luminanzebene, und dann die Differenz dieser beiden zeitlich aufeinanderfolgenden Kantenbilder verglichen wird mit einer entsprechenden Differenz von Kantenbildern, die im Referenzvideo 120 aus den zeitlich korrespondierenden Bildern 126₁ und 126₂ gewonnen wurden. Kantenbilder werden wie bei den anderen Analyseoptionen auch beispielsweise über entsprechende Hochpassfilterung ermittelt. Eine geeignete örtliche Mittelung kann wiederverwendet werden, um zu einem Maß für die Unterschiede dieser zeitlichen Änderungen zu gelangen. Der Hintergrund der Analyse zu dem zeitlichen Verlauf der Störungen ist derjenige, dass unerwartete, mit zeitlichen Änderungen behaftete Störungen vom Betrachter als sehr lästig empfunden werden. Zur Bewertung dieser Störungsklasse werden die zeitlichen Änderungen des Kantenbildes von Referenzvideo und Testvideo mitprotokolliert. Die Indikatoren, die hier berechnet werden, beschreiben den Unterschied der Änderungen des Kantenbilds für das aktuelle Bild bzw. Frame zwischen Referenzbild 126 und Testbild 26. Da der Betrachter unterschiedlich reagiert, abhängig davon, ob eine Störung hinzugefügt, oder ein Teil entfernt wird, können für diese Klasse zwei Indikatoren bzw. Parameter berechnet werden: die örtliche Mittelung erfolgt hier mit Hilfe einer gewichteten L5-Norm für hinzugefügte Störungen und einer gewichteten L2-Norm für fehlende Anteile. Das sind allerdings eben nur Beispiele, von denen gegebenenfalls auch abgewichen werden kann.

Werden alle obigen Analysen und sich ergebende Parameter eingebunden, so ergibt sich in jedem Parametersatz 62 eine Anzahl von sechs Parametern, die den jeweiligen Mediaabschnitt, hier das jeweilige Bild, beschreiben, wie es sich aus dem Datenstromabschnitt ergibt, der der Kennung eindeutig zugeordnet ist, die wiederum zugehörig zu diesem Parametersatz 62 in der Tabelle 34 gespeichert ist.

Nachfolgend werden mögliche Implementierungsdetails für die Qualitätsbestimmung des Qualitätsbestimmers 46 oder die Kodierqualitätsabschätzung 94 beschrieben. Die oben skizzierte Speicherung der Indikatoren bzw. Parameter auf beispielsweise Bildebene, d.h. für Medienabschnitte 24' der Größe einzelner Bilder, in der Datenbank 34 ermöglicht eine nachträgliche Berechnung der Qualität eines Abschnittes der empfangsseitig erhaltenen Videosequenz in der Vorrichtung 32, nämlich für einen Testabschnitt bzw. Betrachtungszeitraum. Im Folgenden wird also die Vorrichtung 32 näher beschrieben, die auf der Empfangsseite die Kodierungsqualitätsabschätzung durchführt. Die Vorrichtung 32 benötigt lediglich Zugriff auf die einzelnen Indikatoren bzw. Parameter. Für diesen Zugriff verwendet sie, wie oben beschrieben, die Identifikationselemente bzw. Kennungen. In der Datenbank 34 stehen Einträge 82 für alle Bilder und für alle Qualitätsstufen zur Verfügung.

Bevor jedoch weiter mit den möglichen Implementierungsdetails fortgefahren wird, wird darauf hingewiesen, dass der Beobachtungszeitraum zur empfangsseitigen Kodierungsqualitätsbestimmung auf Basis der Parametersätze in der Tabelle 34 nicht mit dem offline zur Erzeugung der Parametersätze verwendeten Beobachtungszeiträumen übereinstimmen muss bzw. die Beobachtungszeiträume, die empfangsseitig und offline zur Tabellenerzeugung verwendet werden. Unterschiedliche Anfangs- und Endzeitpunkte sind möglich. Dabei ist es aber gegebenenfalls vorteilhaft, zu beachten, dass keine Unterbrechungen innerhalb der Beobachtungszeiträume bzw. innerhalb der Testabschnitte vorkommen. Dadurch ist es möglich, die Umschaltvorgänge von modernen Streaming-Verfahren zu erfassen, um den tatsächlichen Qualitätsverlauf abzuschätzen.

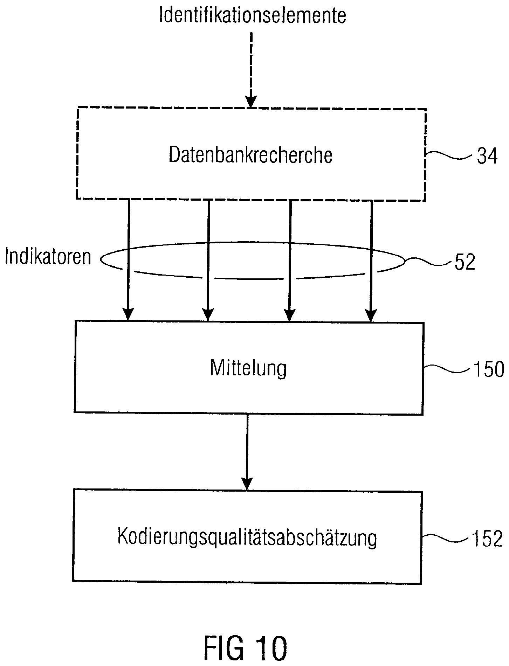

Fig. 10 zeigt ein Flussdiagramm für eine mögliche Implementierung der Kodierqualitätsabschätzung 94 oder Qualitätsbestimmung in dem Qualitätsbestimmer 46. Die mittels der Kennungen 50 in der Datenbank 34 durch Nachschlagen gewonnenen Parametersätze 52 bzw. die Sammlung 58 (vgl. Fig. 3) derselben für den aktuellen Betrachtungszeitraum bzw. den aktuellen Testabschnitt des Mediainhalts bzw. Videos werden zunächst einer Mittelung, d.h. einer Mittelung über die Zeit, in Schritt 150 unterworfen, um dann auf Basis eines Ergebnisses der Mittelung in einem Schritt 152 eine Kodierungsqualitätsabschätzung durchzuführen. Genauer ausgedrückt werden also anhand der aus dem tatsächlichen übertragenen Datenstrom 18 durch die Vorrichtung 32 berechneten Identifikationselementen bzw. Kennungen die zugehörigen Parametersätze bzw. Indikatoren 52 aus der Datenbank 34 bestimmt und in einem entsprechenden Mittelungsmodul der Mittelung 150 unterzogen. Die Anzahl der Parametersätze 52, die der Mittelung unterzogen werden, entspricht der Anzahl der Einzelbilder 26 in dem Beobachtungszeitraum, wie es im Zusammenhang mit Fig. 2 beschrieben wurde, nämlich dem Beobachtungszeitraum bzw. Testabschnitt, in dem die Kodierqualitätsabschätzung durchgeführt werden soll.

Bei der Mittelung 150 werden die einzelnen Indikatoren bzw. Parameter über die Zeit gemittelt. Unterschiedliche Mittelungsverfahren können beispielsweise für unterschiedliche Indikatorklassen bzw. unterschiedliche der Parameter eingesetzt werden. Folgende Mittelungsmethoden pro Indikator bzw. Parameter sind möglich:
- Indikatoren der Ähnlichkeitsanalyse:
   Mittelung 1 dieser Indikatoren erfolgt über eine logistische Abbildung der Einzelwerte mit anschließender L2 Norm über den zeitlichen Verlauf der Elemente.
   Mittelung 2 dieses Indikators erfolgt über eine logistische Abbildung der Einzelwerte mit anschließender L4 Norm über den zeitlichen Verlauf der Elemente.
- Indikatoren der Kantenanalyse:
   Mittelung 1 dieses Indikators erfolgt über eine lineare Abbildung der Einzelwerte mit anschließender L2 Norm über die zeitlichen Elemente.
   Mittelung 2 dieses Indikators erfolgt über eine logistische Abbildung der Einzelwerte mit anschließender L2 Norm über die zeitlichen Elemente.
- Indikatoren der Blockanalyse:
   Der zeitlich gemittelte Indikatorwert ist der Minimalwert der Einzelwerte.
- Indikatoren der Chrominanzanalyse:
   Die Mittelung dieser Indikatoren erfolgt über eine L1 Norm der Elemente.
- Indikatoren zur Analyse vom zeitlichen Verlauf der Störung:
   Die Mittelung der Indikatoren für hinzugefügte Störungen erfolgt über eine L1 Norm.
   Die Mittelung der Indikatoren für entfernte Anteile erfolgt über eine L1 Norm.

Die Qualitätsabschätzung 152 des zu messenden Abschnitts erfolgt anschließend anhand der zeitlich gemittelten Indikatoren. Dazu werden die einzelnen, zeitlich gemittelten Indikatoren einer logistischen Funktion zugeführt und anschließend linear gemittelt. Die Parameter der logistischen Funktion sind auch hier abhängig von der Bildgröße.

Die Gesamtqualität der übertragenen Signale wird in Schritt 96 durch Zusammenführen der Kodierqualität und der Übertragungsqualität bestimmt. Zu beachten ist hier, dass maximal ein Kodierqualitätswert pro Betrachtungsabschnitt berechnet wird. Eventuell fehlende Betrachtungsabschnitte, weil z.B. aufgrund von Übertragungsstörungen keine Datenzuordnung möglich war, können durch Interpolation unter Beachtung der Übertragungsstörung berechnet werden. Als Maß für die Gesamtqualitätsabschätzung kann ein einzelner Zahlenwert ermittelt werden, oder aber auch die Verteilung der Qualitätsstufen in Form eines Histogramms angegeben werden.

Es wird also abschließend noch mal darauf hingewiesen, dass obige Ausführungsbeispiele lediglich exemplarisch meistens auf Videos bezogen waren. Obige Ausführungsbeispiele sind aber ohne Weiteres auch auf Audiosignale übertragbar. Auch die Kombination der Qualitätsbestimmung, d.h. die Bestimmung der Qualität einer Kombination aus Audio- und Videosignal, ist denkbar. Im Bezug auf die Kennungserzeugung wird darauf hingewiesen, dass diese gemäß einem Ausführungsbeispiel nicht unbedingt in der nicht-dekodierten Domäne, wie z.B. auf Elementary-Stream-Ebene stattfinden muss, und insbesondere nicht unbedingt durch HASH-Wert-Bildung. Vielmehr kann es sein, dass zur Kennungserzeugung auch Teile aus einer dekodierten Version des betreffenden Datenstromabschnitts verwendet werden. Bevorzugt aber wird die im Vorhergehenden beschriebene Version, wonach zur Kennungsermittlung eine nicht-dekodierte Fassung des jeweiligen Datenstromabschnitts zumindest zu einem Großteil, wie z.B. zu mehr als 80%, eine Abbildung zugeführt wird, wie z.B. eine HASH-Abbildung, die auch gegenüber kleinen Veränderungen bzw. einzelnen Bitfehlern in diesem Anteil zu einer anderen Kennung führen, so dass eine sichere Unterscheidbarkeit der Datenstromabschnitte 28 in den Datenbanken 10 gewährleistet ist.

Obwohl im Vorhergehenden nicht darauf hingewiesen worden ist, sollte es einleuchtend sein, dass der Qualitätsbestimmungsdienst, der durch Vorrichtung 32, die Nachschlagtabelle 34 und die Tabellenerzeugung 32 realisiert wird, zu dem Gegenstand eines Bezahlungssystems gemacht werden kann. Anders ausgedrückt, kann das Qualitätsbestimmungskonzept natürlich kommerziell genutzt werden. Lizenzeinnahmen könnten pro Vorrichtung 32 eingenommen werden, pro Qualitätsbestimmungsvorgang, pro Tabellenerzeugung 32, pro Zugriff auf die Tabelle 34, für die Zeitdauer der Bereitstellung und den Umfang der Tabelle 34 oder andere geeignete Optionen.

Wie es aus der Beschreibung von Fig. 7 hervorging, können zusätzlich zu den bereits Bezug nehmend auf Fig. 3 beschriebenen Elementen noch ein Übertragungsfehlerdetektor 186 vorgesehen sein, der einen fehlerhaft empfangenen Anteil des Mediadatenstroms 18 detektiert, wobei der Qualitätsbestimmung 46 ausgebildet sein kann, um für den fehlerhaft empfangenen Anteil die Quantifizierung 88 des Übertragungsfehlers des Mediadatenstroms 18 online durchzuführen und den für den fehlerhaft empfangenen Anteil bestimmten Übertragungsfehler mit der Bestimmung der Gesamtqualität in Schritt 96 zu verwenden.

Hinsichtlich der offline-Erzeugung der Datenbank wird darauf hingewiesen, dass die dort beschriebene Möglichkeit der Unterteilung in Betrachtungszeiträume auch fehlen könnte. Die Erzeugung der Parameter kann auch ohne eine solche Unterteilung für die einzelnen Mediaabschnitt 24' durchgeführt werden.

Eine statistische Analyse der gesammelten Parametersätze eines Testabschnitts, kann wie bereits beschrieben so durchgeführt werden, dass für unterschiedliche der in den gesammelten Parametersätzen enthaltenen Parameter unterschiedliche statistische Auswertungen durchgeführt werden, wie z.B. unterschiedliche statistische Momente und Maße für zentrale Tendenz und/oder Dispersion für unterschiedliche der Parameter bestimmt werden, aber diese sind nicht auf diejenigen eingeschränkt, die im vorhergehenden exemplarisch genannt wurden.

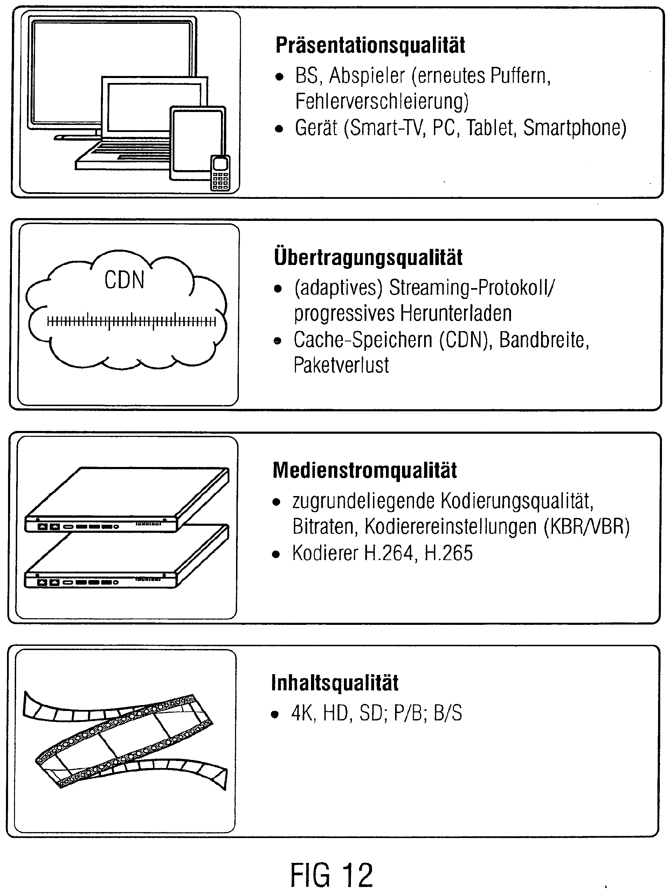

Um die Vorteile und Wirkungen der oben umrissenen Ausführungsbeispiele realistischer zu zeigen, wird ein vierschichtiges Qualitätsmodell verwendet und im Folgenden unter Bezugnahme auf Fig. 12 vorgestellt, wobei das Modell die unterschiedlichen Quellen widerspiegelt, die Artefakte bei der Übertragung beisteuern könnten.

Inhaltsqualität ("Content Quality"): Ursprünglicher Inhalt kann in meisterhafter Studioqualität bereitgestellt werden, entweder unkomprimiert oder nur leicht mit sehr hohen Bitraten kodiert. Der Ausdruck "Content Quality" bezieht sich deshalb auf die höchste verfügbare Qualität des ursprünglichen Inhalts. Sie ist definiert durch die ursprüngliche Bild- bzw. Rahmengröße (UHD, HD oder SD), progressives oder verschachteltes Abtasten und die ursprüngliche Bildfrequenz (29,97, 25 oder 24 Bilder/Sek.). Roher Videoinhalt, der enorme Speicher/Übertragungsressourcen erfordern würde, wird kodiert, bevor er gespeichert und verteilt werden kann.

Medienstromqualität ("Media Stream Quality"): Für die Verteilung über IP muss das Video transkodiert werden (d.h. effizienter neu kodiert werden), um zu verschiedenen Verteilungsformaten zu passen. Wir bezeichnen diese Schicht als die "Media Stream Quality". Die Qualität des komprimierten Videos in dieser Phase ist definiert durch die Qualität des ursprünglichen Inhalts plus die Kodierungsqualität. Letztere wird hauptsächlich bestimmt durch den Typ von Kodierer, meist H.264, zusammen mit Kodierungsparametern, hauptsächlich der Ausgangsbitrate, sowie einige andere Einstellungen. Diese Einstellungen umfassen die Ziel-Bildfrequenz, ein Verhältnis von I-, B- und P-Rahmen bzw. Bildern, sowie weitere Auswahlmöglichkeiten, die die Kodierungseffizienz beeinflussen, z.B. den bevorzugten Typ von Entropiekodierung: CAVLC (context-based adaptive variable length coding = kontextbasiertes, adaptives Kodieren mit variabler Länge) oder CABAC (context-based adaptive binary arithmetic coding = kontextbasiertes, adaptives Binärarithmetik-Kodieren). Ein weiterer Aspekt, der die Medienstromqualität bestimmen könnte, ist der, ob der Kodierer eingestellt ist, um eine konstante Bitrate (KBR) oder eine variable Bitrate (VBR) zu erzeugen.

Allen adaptiven Streaming-Lösungen gemein ist, dass der Inhalt mit verschiedenen Bitraten und so Qualitäten bereitgestellt werden soll, während der Client zwischen den unterschiedlichen Qualitätsstufen mehr oder weniger "reibungslos" umschaltet, wie es das jeweilige Netz oder Netzwerk erlaubt. In der Praxis könnte dies bedeuten, dass sich der gleiche Inhalt auf dem Server in beispielsweise bis zu 11 Strömen befindet, die jeweils mit unterschiedlichen Bitraten und für unterschiedliche Ziel-Bildschirme kodiert sind. Es wird darauf hingewiesen, dass sich unter Umständen nicht nur die Bitrate verändern wird, wenn von einem Strom zu einem anderen umgeschaltet wird, abhängig von der verfügbaren Bitrate könnten sich auch die Bildgröße (Auflösung) und das Kodiererprofil ändern.

Übertragungsqualität ("Transmission Quality"): Die Paketübertragung in echten Netzen ist selten verlustfrei. Bandbreitenfehlanpassungen, das Fallenlassen von Paketen, Latenz und andere Übertragungsbeeinträchtigungen können zu einer schwerwiegenden Verschlechterung der Videoqualität führen und so die QoE eines Teilnehmers dämpfen. Folglich wird die "transmission quality" durch diese Übertragungsbeeinträchtigungen bestimmt. Es wurden verschiedene Streaming-Aufbauten und -Protokolle entwickelt, um mit den Echtzeit-Beschränkungen fester und mobiler Netze klarzukommen, insbesondere zur Anpassung an die momentan verfügbare Bitrate. Während sich für ein progressives Herunterladen die Bildgröße und Bitrate, wenn sie einmal ausgewählt wurden, während der Videovorführung nicht verändern, kommt das dynamische Element für adaptive Streaming-Protokolle ins Spiel, wenn Video (und/oder Audio) mit mehreren Bitraten für jeden 2- bis 4-Sekunden-Chunk kodiert wird. Der Client/Player (Abspieler) kann nun die Chunks auswählen, die seinen Bedürfnissen am besten entsprechen - die besten Bitraten und Auflösungen, die er in diesem Moment handhaben kann. Web-Server liefern üblicherweise Daten so schnell, wie es die Netzbandbreite erlaubt. Der Client kann ohne Weiteres vor der Zeit die Benutzerbandbreite einschätzen und entscheiden, größere oder kleinere Chunks herunterzuladen.

Präsentationsqualität: Der Schlüsselfaktor für die wahrgenommene Präsentationsqualität ("Presentation Quality") ist das Client-Gerät selbst: Flachbild-Fernseher, Tablet oder Smartphone. Neben der Bildschirmgröße und der Betrachtungsumgebung, die ganz unterschiedliche Benutzererwartungen beinhalten kann, hat die Player-Software einen merklichen Einfluss auf die Präsentationsqualität: Parameter, wie die Größe des Playbacks (Wiedergabe) und der Download-Puffer sind vollständig kundenspezifisch anpassbar.

Zusätzlich zu den vorstehenden Aspekten hängt die Präsentationsqualität von einer Zahl von Aspekten auf der Client-Seite ab, nämlich:
- den CPU-Leistungs-, Speicher- und Verbindbarkeitsbeschränkungen des Endbenutzergeräts
- dem Betriebssystem und dessen inhärenter Unterstützung von Streaming-Protokollen
- der Leistungsfähigkeit des verwendeten Streaming-Protokolls, also effektiv der Absprache zwischen Client/Server
- der Player-Software, einschließlich erneutes Puffern (Re-Buffering), Fehlerverschleierungstechniken usw., die entweder ein Merkmalssatz des Betriebssystems, eines Internet-Browsers, eines Plug-Ins (Dritter) (z.B. Adobe Flash, Microsoft Silverlight) oder einer App sind, die durch einen OTT-Service-Provider (Dienstanbieter) bereitgestellt wird, und
- schließlich der Größe, Auflösung und Aktualisierungsrate der (nativen) Anzeige oder eines angeschlossenen Monitors oder TV, seiner Schnittstellen (WLAN, RGB oder HDMI) zusammen mit der Betrachtungsumgebung.

Das entwickelte vierschichtige OTT-Qualitätsmodell ist in Fig. 12 dargestellt. Der gerade vorgestellte vierschichtige Ansatz passt sehr gut zu den Beteiligten, die in dem Fall von OTT-Streaming-Diensten bei einer QoE-Rivalität mit den Teilnehmern beteiligt sind: tatsächlich beinhaltet das vierschichtige Modell aus Fig. 12 eine 1:1-Entsprechung mit diesen Beteiligten:
- Die Inhaltsqualität fällt unter die Verantwortung des Inhaltseigners. Beispiele von Inhaltseignern sind Sony Pictures, Paramount, Universal, Warner Bros. usw. (registrierte Marken). Diese wollen ihren Ertragsstrom durch Vermarkten ihrer Film- und TV-Serienproduktionen über neue VoD-Kanäle erweitern.
- Die Medienstromqualität unterliegt der Verantwortung des OTT-Anbieters, Beispiele von OTT-Anbietern sind Netflix, Hulu, Amazon/Lovefilm usw. (registrierte Marken). Diese konkurrieren miteinander um neue Geschäftsmodelle für Online-Videoangebote, konkurrieren jedoch auch mit Inhaltseignern, die selbst OTT-Dienste aufbauen.
- Die Übertragungsqualität unterliegt klar der Verantwortung des Netzbetreibers. Beispiele von Netzbetreibern sind BBC, Deutsche Telekom, Time Warner Cable. Diese liefern die Transportinfrastruktur, richten jedoch auch ihre eigenen VoD-Angebote ein (BBC iPlayer, Telekom Entertain) sowie
- Die Präsentationsqualität unterliegt hauptsächlich der Verantwortung des Geräte- oder Hörer-Herstellers. Derartige Hersteller von Endbenutzergeräten, wie angeschlossenen und Smart-TVs, Set-Top-Boxen ("STB", einschließlich angeschlossener Blu-Ray-Player und Spielekonsolen), PCs, Tablets und Smartphones, sowie Verkäufer von Betriebs- und Standardsoftware (Microsoft, Adobe, Apple), liefern die Benutzerschnittstelle zu dem Betrachter (= Teilnehmer).

Wir können, basierend auf dem vierschichtigen Qualitätsmodell, zusammenfassen, dass die Anforderungen für ein genaues Wahrnehmungsmaß, das für adaptives Streaming geeignet ist, wie folgt sind:

Auswertung/Evaluierung der Inhaltsqualität: abhängig von der Zugänglichkeit wird entweder die meisterhafte Studio-Qualität des ursprünglichen Inhalts oder eine (leicht kodierte) Version zur Verteilung als die Inhaltsqualität darstellend betrachtet. Diese "Referenz"-Qualität bildet die Basis für jede FR-Messung zum Auswerten der Menge von Komprimierungsartefakten, die sich durch Kodieren und späteres Transkodieren anhäufen. Folglich sollte ein Adaptives-Streaming-Qualitätsmaß in der Lage sein, dieses Referenzsignal aufzunehmen.

Auswertung der Medienstromqualität: für adaptives Video-Streaming wird sich nicht nur die Bitrate ändern, wenn von einem Strom zu einem anderen umgeschaltet wird, sondern abhängig von der verfügbaren Bitrate werden sich auch die Bildgröße (Auflösung) und das Kodiererprofil ändern. Folglich muss ein Wahrnehmungsmaß der Videoqualität für adaptives Streaming geeignet sein für eine Skalierbarkeit von Auflösungen und Bildgrößen.

Auswertung der Übertragungsqualität: ein Wahrnehmungsqualitätsmaß, das für adaptives Streaming geeignet ist, muss nicht nur empfindlich gegenüber allen Arten von Übertragungsartefakten verdrahteter und drahtloser IP-Netze sein, sondern muss geeignet sein, die Artefakte von einem adaptiven Umschalten von Chunks mit unterschiedlicher Bitrate in einem Langzeitzusammenhang auszuwerten. Dies erfordert außerdem eine Skalierbarkeit in dem Zeitbereich, der von einem Mikrobereich (Chunk -Länge) zu einem Makrobereich (tatsächliche Länge des Inhalts) reicht.

Auswertung der Präsentationsqualität: Der Schlüsselfaktor für die wahrgenommene Präsentationsqualität ist das Client-Gerät selbst: Flachbild-TV, Tablet oder Smartphone. Neben der Bildschirmgröße und der Betrachtungsumgebung, die komplett unterschiedliche Benutzererwartungen beinhalten kann, muss ein Wahrnehmungsqualitätsmaß, das für adaptives Streaming geeignet ist, empfindlich gegenüber allen Arten von Artefakten sein, die durch die Player-Software eingeführt werden.

Zusammenfassend sollte eine genaue Wahrnehmungsvideoqualitätsmessung für adaptives Streaming nicht nur in der Lage sein, die unterschiedlichen Bitraten (= Qualitäten) kontinuierlich zu verfolgen, sondern auch auszuwerten, wie oft der Player die Ströme wechselt, und wie "reibungslos" der Player in einem überlasteten Netzwerk mit dem Server interagieren kann. Zusätzlich sollte sie in der Lage sein, die Bildqualität für unterschiedliche Bildgrößen und Bildfrequenzen zu messen und zu vergleichen. Schließlich sollten die Geräteeigenschaften und die Betrachtungsumgebung für eine genaue Vorhersage der wahrgenommenen QoE berücksichtigt werden.

Die oben vorgestellten Ausführungsbeispiele können diese Bedürfnisse erfüllen oder zumindest eine Basis zum Erzielen all dieser Anforderungen bilden.

Der erste Gedanke hinter den oben vorgestellten Ausführungsbeispielen ist der, dass eine Analyse von Videos mit 2 bis 4 Sekunden, welche beim adaptiven Video-Streaming allgemein als die Chunk-(Sequenz-)Länge betrachtet wird, noch einigermaßen gut in den standardisierten Verwendungsfall momentaner Standards passt. Die oben vorgestellten Ausführungsbeispiele sorgen für eine Möglichkeit eines Kombinierens verketteter Messungen für längere Sequenzen.

Der zweite Gedanke hinter den oben vorgestellten Ausführungsbeispielen ist der, dass die vier erwähnten Qualitätsschichten (Inhalts-, Medien-, Übertragungs- und Präsentationsqualität) in dynamische und quasi konstante Qualitätsaspekte gruppiert werden können:

Die Kodierungsqualität eines Medienstroms, der auf einem Streaming-Server (vgl. 10 und 12 in Fig. 1) für eine typische Auf-Abruf-OTT-Anwendung vorhanden ist, kann als "quasi konstant" betrachtet werden. Die Kodierungsqualität der Dateien auf dem Server bleibt, sobald sie in unterschiedliche Qualitätsstufen kodiert und formatiert wurde, gleich.

Die Übertragungs- und Präsentationsqualität andererseits verändern sich für jede Anforderung eines bestimmten Inhalts durch ein bestimmtes Netzwerk dynamisch.

Im Hinblick auf diese beiden Aspekte sind die obigen Ausführungsbeispiele in der Lage, den quasi konstanten und den dynamischen Aspekt in einer Weise abzudecken, die die Kombination beispielsweise einer hochgenauen FR-Videoqualitätsmessung mit einer Echtzeitmessung ermöglicht, selbst auf Mobilgeräten. Folglich wird ein Hybrid-Aufbau verwendet, der aus zwei Hauptblöcken besteht: einer Medienstromqualitätsanalyse (vgl. 64 und 66) und einem Client-Messkopf (vgl. Fig. 3).

Die Aufgabe der Medienstromqualitätsanalyse besteht darin, die Medienstromqualität eines bestimmten kodierten Inhalts, wie dieser auf dem Streaming-Server (vgl. 10 und 12 in Fig. 1) vorliegt, zu bestimmen. Für den Fall adaptiven Streamings bedeutet dies ein Einschätzen der Medienstromqualität für jede Qualitätsstufe dieses Inhalts (vgl. Fig. 2 und 5).

Diese Analyse wird in zwei Schritten ausgeführt: Erfassung des Inhalts und tatsächliche Qualitätsmessung.

Während der Erfassung werden alle Chunks (Brocken) - entsprechend den vorgehend erwähnten Mediadatenstromabschnitten 24 - aller kodierten Qualitätsstufen (vgl. Q₁ bis Q₄ in Fig. 2) von dem Streaming-Server geholt. Da adaptives Streaming über TCP läuft, besteht kein Risiko eines Paketverlusts, was zusätzlich Verzerrungen während der Erfassung einführen würde. Es sollte jedoch Sorge getragen werden, dass alle Qualitätsstufen des Inhalts vollständig ohne Lücken erfasst werden, die durch einen verlorenen Chunk auf dem Server bewirkt werden könnten, oder durch eine nicht korrekte manifeste Datei.

Die tatsächliche Analyse der Medienstromqualität kann, beispielsweise und wie oben dargelegt wurde, auf dem standardisierten FR-Videoqualitätsmodell PEVQ aufgebaut sein, das weiterentwickelt wurde, um eine ordnungsgemäße Analyse von Video- Chunk mit kurzer Länger sicherzustellen. Ein Referenz-Video, üblicherweise der ursprüngliche Inhalt mit hoher Auflösung, muss als Eingabe in PEVQ bereitgestellt werden, während die verminderten Videos durch Dekodieren der erfassten Qualitätspegel mit einem Referenzdekodierer erzeugt werden. Die Analyse (vgl. Fig. 5) ergibt einen Satz von Qualitätswerten für jedes Bild jeder Qualitätsstufe. Durch Sammeln (vgl. Fig. 3) dieser Qualitätswerte über eine bestimmte kurze Videodauer, beispielsweise 10 s, ist es möglich, beispielsweise ein J.247-kompatibles MOS-Resultat für das entsprechende Video zu berechnen.

Die Medienstromqualitätsdatenbank (vgl. 10) speichert die Qualitätswerte zusammen mit einigen Metainformationen des jeweiligen Inhalts. Die Informationen in der Datenbank werden dann während der Messung der dynamischen Qualitätsaspekte durch den Client-Messkopf (nämlich 32 in Fig. 1) verwendet.

Der Hauptvorteil eines Messens der Medienstromqualität aus den dekodierten Videosignalen besteht darin, dass die Analyse agnostisch gegenüber der zugrunde liegenden eingesetzten Kodierungstechnologie ist. Dies stellt genaue und konsistente Messergebnisse über unterschiedliche Kodierungssysteme hinweg sicher. Ein weiterer bemerkenswerter Vorteil besteht darin, dass, da die Medienstromqualität als quasi konstant betrachtet wird, die Datenbank nur einmal für jeden Inhalt erzeugt werden muss. Dies bedeutet, dass rechentechnisch aufwendige Videodekodierung und, möglicherweise, FR-Qualitätsanalyse nicht für jeden Test wiederholt werden müssen, noch müssen sie auf dem Client-Gerät laufen, sondern können einer speziellen entkoppelten Medienstromqualitätsanalyse-Vorrichtung zugeteilt sein.

Die Aufgabe des Client-Messkopfes besteht darin, die dynamische Video-Streaming-Qualität (d.h. Übertragungs- und Präsentationsqualität) zu analysieren und diese mit den Informationen über die statischen Qualitätsaspekte (Inhalts- und Medienstromqualität) zur Berechnung eines letztendlichen QoE-Punktwerts zu kombinieren.

Zu diesem Zweck erfasst der Messkopf den eingehenden HTTP-Verkehr, gefolgt durch eine Bitstromanalyse:

Während dieser Bitstromanalyse können Netzpaketeigenschaften, wie z.B. Jitter und erneute Paketsendungen, berücksichtigt werden. Für jedes Bild des gestreamten Videoinhalts kann die Ankunftszeit an dem Client berechnet werden.

Diese Informationen werden dann einem Streaming-Player-Modell zugeführt, das das Abspielverhalten des Software-Players auf dem Client-Gerät nachbildet. Folglich stellt die Player-Modell-Ausgabe das reale Abspielverhalten des Videos unter den momentanen Netzbedingungen dar. Dies beinhaltet Effekte wie anfängliches Puffern (Zeit bis zum ersten Abspielen) und erneutes Puffern/Anhalten.

Sehr typisch für adaptives Streaming ist, dass der Software-Player auf dem Client-Gerät verantwortlich für ein Verhandeln der Bitrate für jeden Chunk mit dem Server in Abhängigkeit von der Netzüberlastung und so dem leerlaufenden Puffer ist. Folglich können Qualitätswerte für die Medienstromqualität in der Datenbank nun exakt für jeden Chunk und jede Bitrate identifiziert werden, wie dies von dem Player gefordert wird. Die tatsächliche Qualität des gestreamten Videos wird dann durch Sammeln und Nachverarbeiten der gespeicherten Qualitätswerte für die empfangene Videosequenz berechnet.

Der Hybrid-Ansatz, der oben vorgestellt wurde, besitzt außerdem den Vorteil einer Verarbeitung der genauen Kodierungsqualität des tatsächlichen empfangenen Videos an dem Client ohne die Rechenlast der FR-Messung, während letztere ohne Weiteres während einer entkoppelten vorverarbeiteten Medienstromanalyse ausgeführt werden kann.

Der Messkopf könnte beispielsweise auf einem Testgerät auf PC-Basis mit HTTP-Zugriff auf die Datenbank laufen oder für mobile und tragbare Anwendungen könnte der Messkopf sogar in Software auf dem Streaming-Client eingebettet sein, die parallel zu dem Streaming-Player läuft. Abhängig von dem Verwendungsfall, beispielsweise sog. Drive- bzw. Walk-Tests mobiler Netze (also Messungen mit mobilen Geräten in Fahrzeugen oder zu Fuß), wird üblicherweise ein wohldefinierter und damit sehr eingeschränkter Satz von Videotestsequenzen verwendet. Ferner ist es vorzuziehen, , , einen entkoppelten Ausschnitt der Datenbank auf dem Client-Gerät zu speichern, um Beeinflussungen der Messung durch zusätzlichen Netzverkehr während eines Datenbankzugriffs auszuschließen.

So ermöglicht das Konzept der oben erläuterten Ausführungsbeispiele eine Anzahl von Anwendungs- und Verwendungsfällen. Das Optimierungspotenzial liefert eine nützliche Anleitung für alle Beteiligten, d.h. Inhaltseigner, Netz- und CDN-Betreiber, OTT-Dienstanbieter und Gerätehersteller.

Die Hybridarchitektur ist hervorragend geeignet für ein Kombinieren des Vorteils einer wenig komplexen Bitstromanalyse auf der Client-Seite mit der hochgenauen, aber konplexen FR-Messung einer echten pixelbasierten Bildqualitätsanalyse.

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.
Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

## Patentansprüche

1. Vorrichtung zum Bestimmen einer Qualität eines Mediadatenstroms (18), der eine Sequenz von Datenstromabschnitten (22) aufweist, die unterschiedliche Mediaabschnitte (26) eines Mediainhalts (20) in über den Mediainhalt hinweg variierenden Qualität-zu-Bitrate-Stufen übertragen, wobei die Vorrichtung ausgebildet ist, um:
aus jedem Datenstromabschnitt (22) durch eine für alle Datenstromabschnitte gleiche Ableitungsvorschrift eine Kennung (50) für den jeweiligen Abschnitt (22) abzuleiten;
für jeden Datenstromabschnitt (22) einen Parametersatz (52), der eine Kodierqualität des Datenstromabschnitts beschreibt, aus einer Nachschlagtabelle (34) anhand der für den jeweiligen Datenstromabschnitt (22) abgeleiteten Kennung (50) nachzuschlagen;
die Parametersätze (52) zu sammeln, die für Datenstromabschnitte (22) nachgeschlagen werden, die Mediaabschnitte (24') übertragen, die in einem Testabschnitt des Medieninhalts (20) liegen; und
die Qualität auf Basis der gesammelten Parametersätze zu bestimmen, wobei die Vorrichtung durch einen Mikroprozessor, einen programmierbaren Computer oder eine elektronische Schaltung implementiert ist.

2. Vorrichtung gemäß Anspruch 1, die ferner ausgebildet ist, um die Ableitung der Kennung auf Basis einer nicht-dekodierten Version des jeweiligen Datenstromabschnitts (22) durchzuführen.

3. Vorrichtung gemäß Anspruch 1 oder 2, bei der die Sequenz von Datenstromabschnitten (22) die unterschiedlichen Mediaabschnitte (24') des Mediainhalts (20) so übertragen, dass eine Variation der Qualität-zu-Bitrate-Stufen in Einheiten von Abschnitten (24) des Mediadatenstroms (18) stattfindet, die in sich abgeschlossen sind, um getrennt von anderen Abschnitten des Mediadatenstroms wiedergebbar zu sein, wobei jeder Abschnitt (24) einen oder mehrere Mediaabschnitte (24') umfasst.

4. Vorrichtung gemäß Anspruch 3, bei der die Abschnitte (24) GOPs oder einzelne Dateien sind.

5. Vorrichtung gemäß einem der vorhergehenden Ansprüche, bei der die Datenstromabschnitte (22) jeweils als Mediaabschnitt (24') ein Bild (26) eines Videos als Mediainhalt (20) übertragen.

6. Vorrichtung gemäß einem der Ansprüche 1 bis 5, die ferner ausgebildet ist, um einen fehlerhaft empfangenen Anteil des Mediadatenstroms (18) zu detektieren, und um für den fehlerhaft empfangenen Anteil eine Quantifizierung (88) eines Übertragungsfehlers des Mediadatenstroms online durchzuführen und den für den fehlerhaft empfangenen Anteil bestimmten Übertragungsfehler bei der Bestimmung der Qualität zu verwenden (96).

7. Vorrichtung gemäß einem der vorhergehenden Ansprüche, bei der jeder Parametersatz ein oder mehrere aus folgender Menge aufweist:
ein korrelationsbasiertes Maß einer Ähnlichkeit zwischen einer rekonstruierten Version des Medienabschnitts, der durch den jeweiligen Datenstromabschnitt übertragen wird, und einem korrespondierenden Abschnitt eines Referenzmediainhalts;
ein Maß für Unterschiede von in dem jeweiligen Mediaabschnitt befindlichen Kanten und in dem korrespondierenden Referenz-Abschnitt befindlichen Kanten;
ein Maß für Blockstörungen in dem jeweiligen Mediaabschnitt,
ein Maß für einen Unterschied von Chrominanzebenen in dem jeweiligen Mediaabschnitt und dem korrespondierenden Referenz-Mediaabschnitt; und
ein Maß für Unterschiede von zeitlichen Änderungen von Kanten, die sich in dem jeweiligen Abschnitt befinden, und zeitlichen Änderungen von Kanten, die sich in dem korrespondierenden Mediaabschnitt befinden.

8. Vorrichtung gemäß einem der vorhergehenden Ansprüche, die ferner ausgebildet ist, die Qualität aus einer stochastischen Analyse der gesammelten Qualitätsparametersätze zu bestimmen.

9. Server, der ausgebildet ist, um in einer Nachschlagtabelle
für jeden Medienabschnitt eines Mediainhalts, für jede einer Mehrzahl von Qualität-zu-Bitrate-Stufe,
einen Parametersatz, der eine Kodierqualität eines Datenstromabschnitts beschreibt, in den der jeweilige Medienabschnitt in der jeweiligen Qualität-zu-Bitrate-Stufe kodiert ist, und
eine dem Parametersatz zugeordnete Kennung zu speichern, die aus dem Datenstromabschnitt, in den der jeweilige Medienabschnitt in der jeweiligen Qualität-zu-Bitrate-Stufe kodiert ist, durch eine für alle Datenstromabschnitte gleiche Ableitungsvorschrift ableitbar ist, und
auf eine Anfrage mit einer Kennung mit einer Rücksendung des dieser Kennung zugeordneten Qualitätsparametersatzes zu antworten,
wobei der Server durch einen Mikroprozessor, einen programmierbaren Computer oder eine elektronische Schaltung implementiert ist.

10. Vorrichtung zur Erzeugung einer Nachschlagtabelle, die ausgebildet ist, um
für jeden Medienabschnitt eines Mediainhalts, für jede einer Mehrzahl von Qualität-zu-Bitrate-Stufe,
einen Parametersatz, der eine Kodierqualität eines Datenstromabschnitts beschreibt, in den der jeweilige Medienabschnitt in der jeweiligen Qualität-zu-Bitrate-Stufe kodiert ist, zu erzeugen, und
eine dem Parametersatz zugeordnete Kennung zu erzeugen, die aus dem Datenstromabschnitt, in den der jeweilige Medienabschnitt in der jeweiligen Qualität-zu-Bitrate-Stufe kodiert ist, durch eine für alle Datenstromabschnitte gleiche Ableitungsvorschrift ableitbar ist,
wobei die Vorrichtung durch einen Mikroprozessor, einen programmierbaren Computer oder eine elektronische Schaltung implementiert ist.

11. Verfahren zum Bestimmen einer Qualität eines Mediadatenstroms, der eine Sequenz von Datenstromabschnitten aufweist, die unterschiedliche Mediaabschnitte eines Mediainhalts in über den Mediainhalt hinweg variierenden Qualität-zu-Bitrate-Stufen übertragen, wobei das Verfahren folgende Merkmale aufweist:
Ableiten, aus jedem Datenstromabschnitt, einer Kennung für den jeweiligen Abschnitt durch eine für alle Datenstromabschnitte gleiche Ableitungsvorschrift;
für jeden Datenstromabschnitt, Nachschlagen eines Parametersatzes, der eine Kodierqualität des Datenstromsabschnitts beschreibt, aus einer Nachschlagtabelle anhand der für den jeweiligen Datenstromabschnitt abgeleiteten Kennung;
Sammeln der Parametersätze, die für Datenstromabschnitte nachgeschlagen werden, die Mediaabschnitte übertragen, die in einem Testabschnitt des Mediensignals liegen; und
Bestimmen der Qualität auf Basis der gesammelten Parametersätze.

12. Verfahren zur Erzeugung einer Nachschlagtabelle, mit
für jeden Medienabschnitt eines Mediainhalts, für jede einer Mehrzahl von Qualität-zu-Bitrate-Stufe,
Erzeugen eines Parametersatzes, der eine Kodierqualität eines Datenstromabschnitts beschreibt, in den der jeweilige Medienabschnitt in der jeweiligen Qualität-zu-Bitrate-Stufe kodiert ist, und
Erzeugen einer dem Parametersatz zugeordneten Kennung, die aus dem Datenstromabschnitt, in den der jeweilige Medienabschnitt in der jeweiligen Qualität-zu-Bitrate-Stufe kodiert ist, durch eine für alle Datenstromabschnitte gleiche Ableitungsvorschrift ableitbar ist.

13. Computerprogramm mit einem Programmcode zur Durchführung des Verfahrens nach Anspruch 11 oder 12, wenn das Programm auf einem Computer abläuft.

## Claims

1. Device for determining a quality of a media data stream (18) comprising a sequence of data stream sections (22) which transmit different media sections (26) of a media content (20) at quality-to-bitrate levels that vary across the media content, the device being configured to:
derive, by a derivation specification that is the same for all of the data stream sections, from each data stream section (22) an identifier (50) for the respective section (22);
look up, for each data stream section (22), a parameter set (52) which describes a coding quality of the data stream section from a look-up table (34) by means of the identifier (50) derived for the respective data stream section (22);
aggregate the parameter sets (52) that are looked up for data stream sections (22) that transmit media sections (24') that lie within a test section of the media content (20); and
determine the quality on the basis of the aggregated parameter sets,
wherein the device is implemented by a microprocessor, a programmable computer or an electronic circuit.

2. Device as claimed in claim 1, further configured to perform the derivation of the identifier on the basis of a non-decoded version of the respective data stream section (22).

3. Device as claimed in claim 1 or 2, wherein the sequence of data stream sections (22) transmit the different media sections (24') of the media content (20) in such a manner that a variation of the quality-to-bitrate levels takes place in units of sections (24) of the media data stream (18) that are self-contained, so as to be reproducible separately from other sections of the media data stream, each section (24) including one or more media sections (24').

4. Device as claimed in claim 3, wherein the sections (24) are GOPS or individual files.

5. Device as claimed in any of the previous claims, wherein the data stream sections (22) transmit, as a media section (24') in each case, a picture (26) of a video as a media content (20).

6. Device as claimed in any of claims 1 to 5, further configured to detect a defectively received portion of the media data stream (18) and to perform an online quantification (88) of a transmission artifact of the media data stream for the defectively received portion and to use the transmission artifact determined for the defectively received portion for determining the quality (96).

7. Device as claimed in any of the previous claims, wherein each parameter set comprises one or more of the following:
a correlation-based measure of similarity between a reconstructed version of the media section that is transmitted by the respective data stream section and a corresponding section of a reference media content;
a measure of differences of edges located within the respective media section and edges located within the corresponding reference section;
a measure of block disturbances within the respective media section;
a measure of a difference of chrominance planes within the respective media section and the corresponding reference media section; and
a measure of differences of temporal changes of edges located within the respective section and temporal changes of edges located within the corresponding media section.

8. Device as claimed in any of the previous claims, further configured to determine the quality from a stochastic analysis of the aggregated quality parameter sets.

9. Server configured to store, in a look-up table,
for each media section of a media content, for each of a plurality of quality-to-bitrate levels,
a parameter set which describes a coding quality of a data stream section to which the respective media section at the respective quality-to-bitrate level is encoded, and
an identifier which is associated with the parameter set and which can be derived, by a derivation specification that is the same for all of the data stream sections, from the data stream section to which the respective media section at the respective quality-to-bitrate level is encoded, and
configured to respond to a request comprising an identifier by returning the quality parameter set associated with said identifier,
wherein the server is implemented by a microprocessor, a programmable computer or an electronic circuit.

10. Device for generating a look-up table, the device being configured to
generate, for each media section of a media content, for each of a plurality of quality-to-bitrate levels,
a parameter set which describes a coding quality of a data stream section to which the respective media section at the respective quality-to-bitrate level is encoded, and
an identifier which is associated with the parameter set and which can be derived, by a derivation specification that is the same for all of the data stream sections, from the data stream section to which the respective media section at the respective quality-to-bitrate level is encoded,
wherein the device is implemented by a microprocessor, a programmable computer or an electronic circuit.

11. Method of determining a quality of a media data stream comprising a sequence of data stream sections which transmit different media sections of a media content at quality-to-bitrate levels that vary across the media content, the method comprising:
deriving, by a derivation specification that is the same for all of the data stream sections, from each data stream section an identifier for the respective section;
looking up, for each data stream section, a parameter set which describes a coding quality of the data stream section from a look-up table by means of the identifier derived for the respective data stream section; and
aggregating the parameter sets that are looked up for data stream sections that transmit media sections that lie within a test section of the media content; and
determining the quality on the basis of the aggregated parameter sets.

12. Method of generating a look-up table, comprising
for each media section of a media content, for each of a plurality of quality-to-bitrate levels,
generating a parameter set which describes a coding quality of a data stream section to which the respective media section at the respective quality-to-bitrate level is encoded, and
generating an identifier which is associated with the parameter set and which can be derived, by a derivation specification that is the same for all of the data stream sections, from the data stream section to which the respective media section at the respective quality-to-bitrate level is encoded, and

13. Computer program comprising a program code for performing the method as claimed in claim 11 or 12, when the program runs on a computer.

## Revendications

1. Dispositif pour déterminer une qualité d'un flux de données multimédia (18) présentant une séquence de segments de flux de données (22) qui transmettent différents segments multimédia (26) d'un contenu multimédia (20) dans des étapes de rapport qualité/débit binaire variable du contenu multimédia, dans lequel le dispositif est adapté pour:
dériver de chaque segment de flux de données (22), au moyen d'une règle de dérivation qui est identique pour tous les segments de flux de données, un identificateur (50) pour le segment respectif (22);
consulter, pour chaque segment de flux de données (22), un ensemble de paramètres (52) décrivant une qualité de codage du segment de flux de données dans un tableau de consultation (34) à l'aide de l'identificateur (50) dérivé pour le segment de flux de données respectif (22);
collecter les ensembles de paramètres (52) qui ont été consultés pour les segments de flux de données (22) qui transmettent des segments multimédia (24') qui se trouvent dans un segment de test du contenu multimédia (20); et
déterminer la qualité sur base des ensembles de paramètres collectés,
dans lequel le dispositif est mis en oeuvre par un microprocesseur, un ordinateur programmable ou un circuit électronique.

2. Dispositif selon la revendication 1, qui est conçu par ailleurs pour effectuer la dérivation de l'identificateur sur base d'une aversion non décordée du segment de flux de données respectif (22).

3. Dispositif selon la revendication 1 ou 2, dans lequel la séquence de segments de flux de données (22) transmettent les différents segments multimédia (24') du contenu multimédia (20) de sorte qu'une variation des étapes de rapport qualité/débit binaire ait lieu en unités de segments (24) du flux de données multimédia (18) qui sont indépendantes, pour pouvoir être reproduits séparément d'autres segments du flux de données multimédia, chaque segment (24) comportant un ou plusieurs segments multimédia (24').

4. Dispositif selon la revendication 3, dans lequel les segments (24) sont des GOP ou des fichiers individuels.

5. Dispositif selon l'une des revendications précédentes, dans lequel les segments de flux de données (22) transmettent, chacun, comme segment multimédia (24'), une image (26) d'une vidéo comme contenu multimédia (20).

6. Dispositif selon l'une des revendications 1 à 5, qui est conçu par ailleurs pour détecter une partie du flux multimédia (18) reçue de manière défectueuse, et pour réaliser en ligne, pour la partie reçue de manière défectueuse, une quantification (88) d'une erreur de transmission du flux multimédia et utiliser (96) l'erreur de transmission déterminée pour la partie reçue de manière défectueuse lors de la détermination de la qualité.

7. Dispositif selon l'une des revendications précédentes, dans lequel chaque ensemble de paramètres comporte l'une ou plusieurs de la quantité suivante:
une mesure à base de corrélation d'une similitude entre une version reconstruite du segment multimédia qui est transmis par le segment de flux de données respectif et un segment correspondant d'un contenu multimédia de référence;
une mesure de différences de bords situés dans le segment multimédia respectif et de bords situés dans le segment de référence correspondant;
une mesure de perturbations de blocs dans le segment multimédia respectif,
une mesure d'une différence de niveaux de chrominance dans le segment multimédia respectif et le segment multimédia de référence correspondant; et
une mesure de différences de changements dans le temps de bords situés dans le segment respectif et de changements dans le temps de bords situés dans le segment multimédia correspondant.

8. Dispositif selon l'une des revendications précédentes, qui est par ailleurs conçu pour déterminer la qualité à partir d'une analyse stochastique des ensembles de paramètres de qualité collectés.

9. Serveur, conçu pour mémoriser dans un tableau de consultation
pour chaque segment multimédia d'un contenu multimédia, pour chacune d'une pluralité d'étapes de rapport qualité/débit binaire,
un ensemble de paramètres qui décrit une qualité de codage d'un segment de flux de données dans lequel le segment multimédia respectif est codé dans l'étape de rapport qualité/débit binaire respective, et
un identificateur associé à l'ensemble de paramètres qui peut être dérivé du segment de flux de données dans lequel le segment multimédia respectif est codé dans l'étape de rapport qualité/débit binaire respective par une règle de dérivation qui est identique pour tous les segments de flux de données, et
pour répondre à une demande par un identificateur par un envoi de l'ensemble de paramètres de qualité associé à cet identificateur,
dans lequel le serveur est mis en oeuvre par un microprocesseur, un ordinateur programmable ou un circuit électronique.

10. Dispositif pour générer un tableau de consultation, qui est conçu pour:
générer pour chaque segment multimédia d'un contenu multimédia, pour chacune d'une pluralité d'étapes de rapport qualité/débit binaire,
un ensemble de paramètres qui décrit une qualité de codage d'un segment de flux de données dans lequel le segment multimédia respectif est codé dans l'étape de rapport qualité/débit binaire respective, et
générer un identificateur associé à l'ensemble de paramètres qui peut être dérivé du segment de flux de données dans lequel le segment multimédia respectif est codé dans l'étape de rapport qualité/débit binaire respective par une règle de dérivation qui est identique pour tous les segments de flux de données,
dans lequel le dispositif est mis en oeuvre par un microprocesseur, un ordinateur programmable ou un circuit électronique.

11. Procédé pour déterminer une qualité d'un flux de données multimédia présentant une séquence de segments de flux de données qui transmettent différents segments multimédia d'un contenu multimédia dans des étapes de rapport qualité/débit binaire variable du contenu multimédia, le procédé présentant les caractéristiques suivantes consistant à:
dériver de chaque segment de flux de données un identificateur pour le segment respectif par une règle de dérivation qui est identique pour tous les segments de flux de données;
pour chaque segment de flux de données, consulter dans un tableau de consultation un ensemble de paramètres décrivant une qualité de codage du segment de flux de données à l'aide de l'identificateur dérivé pour le segment de flux de données respectif;
collecter les ensembles de paramètres qui sont consultés pour les segments de flux de données qui transmettent des segments multimédia qui se trouvent dans un segment de test du signal multimédia; et
déterminer la qualité sur base des ensembles de paramètres collectés.

12. Procédé pour générer un tableau de consultation, avec le fait de:
pour chaque segment multimédia d'un contenu multimédia, pour chacune d'une pluralité d'étapes de rapport qualité/débit binaire,
générer un ensemble de paramètres qui décrit une qualité de codage d'un segment de flux de données dans lequel le segment multimédia respectif est codé dans l'étape de rapport qualité/débit binaire respective, et
générer un identificateur associé à l'ensemble de paramètres qui peut être dérivé du segment de flux de données dans lequel le segment multimédia respectif est codé dans l'étape de rapport qualité/débit binaire respective par une règle de dérivation qui est identique pour tous les segments de flux de données.

13. Programme d'ordinateur avec un code de programme pour la réalisation du procédé selon la revendication 11 ou 12 lorsque le programme est exécuté sur un ordinateur.
